# EUROPEAN PATENT SPECIFICATION

(11) **EP 3 991 472 B1**
(45) Date of publication and mention of the grant of the patent: **13.12.2023**
(21) Application number: 20852142.7
(22) Date of filing: 13.08.2020
(51) Int. Cl.: H04W 36/00, H04W 36/30, H04W 36/08, H04W 76/19

(54) **LOOP PROBLEM HANDLING OF CONDITIONAL MOBILITY**
SCHLEIFENPROBLEMHANDHABUNG VON BEDINGTER MOBILITÄT
TRAITEMENT DE PROBLÈMES EN BOUCLE DE LA MOBILITÉ CONDITIONNELLE

(30) Priority: 14.08.2019 KR 20190099893
(43) Date of publication of application: 04.05.2022
(73) Proprietor: LG Electronics Inc., SEOUL 07336 (KR)
(72) Inventor: KIM, Hongsuk, Seoul 06772 (KR); JUNG, Sunghoon, Seoul 06772 (KR); KIM, Sangwon, Seoul 06772 (KR)
(74) Representative: Maikowski & Ninnemann Patentanwälte Partnerschaft mbB
(86) International application number: PCT/KR2020/010799
(87) International publication number: WO 2021/029713

(56) References cited:
- WO-A1-2018/175721
- WO-A1-2019/029015
- WO-A1-2019/029015
- US-A1- 2015 245 261
- LG ELECTRONICS INC: "Consideration on CHO De-configuration and Failure", 3GPP DRAFT; R2-1905098 CONSIDERATION ON CHO DE-CONFIGURATION AND FAILURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Xi'an, China; 20190408 - 20190412 29 March 2019 (2019-03-29), XP051694284, Retrieved from the Internet: URL:http://www.3gpp.org/ftp/tsg%5Fran/WG2% 5FRL2/TSGR2%5F105bis/Docs/R2%2D1905098%2Ez ip [retrieved on 2019-03-29]
- LG Electronics Inc.: "Consideration on CHO De-configuration and Failure", 3GPP Draft; R2-1905098 Consideration on CHO De-configuration and Failure, 3rd Generation Partnership Project (3GPP), Mobile Competence Centre ; 650, route des Lucioles ; F-06921 Sophia-Antipolis Cedex ; France, vol. RAN WG2, no. Xi an, China; 20190408 - 20190412, 29 March 2019 (2019-03-29), XP051694284, Mobile Competence Centre ; 650, route des Lucioles ; F-06921 Sophia-Antipolis Cedex ; France
- ETRI: "FFS in Preparation Phase of CHO", 3GPP Draft; R2-1906564-FFS in Preparation Phase of CHO, 3rd Generation Partnership Project (3GPP), Mobile Competence Centre ; 650, route des Lucioles ; F-06921 Sophia-Antipolis Cedex ; France, vol. RAN WG2, no. Reno, USA; 20190513 - 20190517, 3 May 2019 (2019-05-03), XP051710875, Mobile Competence Centre ; 650, route des Lucioles ; F-06921 Sophia-Antipolis Cedex ; France
- Apple Inc.: "On Mobility in FR2", 3GPP Draft; RP-191110, 3rd Generation Partnership Project (3GPP), Mobile Competence Centre ; 650, route des Lucioles ; F-06921 Sophia-Antipolis Cedex ; France, vol. TSG RAN, no. New Port Beach, US; 20190603 - 20190606, 27 May 2019 (2019-05-27), XP051739395, Mobile Competence Centre ; 650, route des Lucioles ; F-06921 Sophia-Antipolis Cedex ; France

## Description

### BACKGROUND OF THE DISCLOSURE

### Field of the Disclosure

The present disclosure relates to loop problem handling of conditional mobility, e.g., conditional handover (CHO).

### Related Art

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

As part of 3GPP's Release 16, conditional handover (CHO) is a new solution that aims to improve the mobility robustness of a mobile terminal.

WO 2019/029015 A1 discloses a communication handover method. The method comprises: determining whether times of initiating a conditional handover or the conditional handover being not completed is greater than a predetermined threshold within a predetermined period by a user equipment /base station; and ceasing to initiate the conditional handover /configure a new conditional handover within the predetermined period by the user equipment /base station when the times is greater than the predetermined threshold.

WO 2018/175721 A1 discloses a wireless transmit/receive unit (WTRU) that may receive, from a serving cell based on a measurement report, a conditional reconfiguration message that includes a trigger condition and configuration information for handover to a target cell based on the trigger condition. The conditional reconfiguration message may be stored and the WTRU monitors trigger quantities of the serving cell and the target cell for the trigger condition being met. When the trigger condition is met within a validity period, then the WTRU applies the received configuration information and starts the handover to the target cell.

### SUMMARY OF THE DISCLOSURE

### (Technical Problem)

Connection recovery procedure, e.g., radio resource control (RRC) connection re-establishment procedure, may take a long time and service interruption can occur. Therefore, there is a working assumption that when a failure (e.g., radio link failure (RLF), handover failure (HOF), etc.) happens, if a candidate cell of conditional mobility (e.g., conditional handover (CHO)) is selected upon cell selection, then the UE can attempt conditional mobility execution towards the selected cell instead of performing a connection recovery procedure. In this case, loop problem of performing conditional mobility should be addressed.

### (Technical Solution)

The objects of the present invention are solved by the features of the independent claims. Preferred embodiments are defined in the dependent claims.

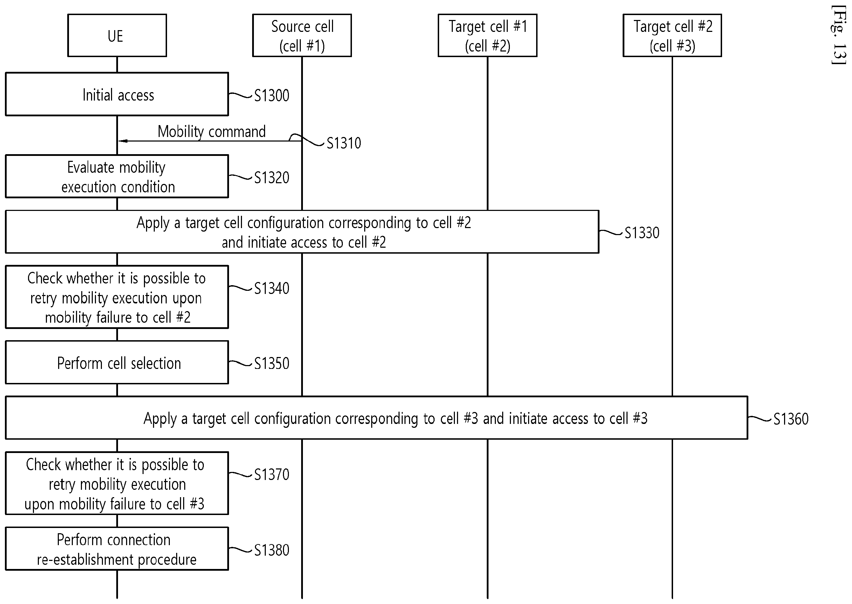

In the following, the embodiment described in relation to Figure 13 is covered by the claims. Other embodiments and/or aspects are provided for illustrative purposes. In an aspect, a method performed by a wireless device configured to operate in a wireless communication system according to claim 1 is provided.

In another aspect, a wireless device configured to operate in a wireless communication system according to claim 6 is provided.

In another aspect, a computer readable medium according to claim 9 is provided.

### (Advantageous effect)

The present disclosure can have various advantageous effects.

For example, according to implementations of the present disclosure, loop problem of conditional mobility execution can be resolved.

For example, according to implementations of the present disclosure, the UE can practically use resources for conditional mobility as much as possible without additional network interworking.

For example, unless the present disclosure is applied, another approach should be needed in order to resolve the loop problem of conditional mobility execution. For example, it may need to consider additional timer to indicate end point of validity of conditional mobility configuration. The additional timer should be a common timer which is applied to all candidate cells for maintaining conditional mobility configuration. The LTE should release all conditional mobility configurations unless the UE succeeds conditional mobility execution before expiry of the additional timer. However, this approach is not practical for pressing situation to perform mobility because it requires additional interworking between the source cell and all candidate cells to introduce the additional timer and decide proper timer value especially in the most cases of mobility scenario.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows another example of wireless devices to which implementations of the present disclosure is applied.
FIG. 5 shows an example of UE to which implementations of the present disclosure is applied.
FIGs. 6 and 7 show an example of protocol stacks in a 3GPP based wireless communication system to which implementations of the present disclosure is applied.
FIG. 8 shows a frame structure in a 3GPP based wireless communication system to which implementations of the present disclosure is applied.
FIG. 9 shows a data flow example in the 3GPP NR system to which implementations of the present disclosure is applied.
FIG. 10 shows an example of inter-gNB handover procedures to which implementations of the present disclosure is applied.
FIG. 11 shows an example of overall procedure for condition based autonomous handover procedure to which implementations of the present disclosure is applied.
FIG. 12 shows an example of a method performed by a wireless device configured to operate in a wireless communication system to which implementations of the present disclosure is applied.
FIG. 13 shows an example of a conditional mobility upon conditional mobility execution failure according to the present invention.
FIG. 14 shows an example of a conditional mobility upon RLF that is not claimed.

### BRIEF DESCRIPTION OF THE DRAWINGS

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. LTE-advanced (LTE-A) is an evolved version of 3GPP LTE.

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

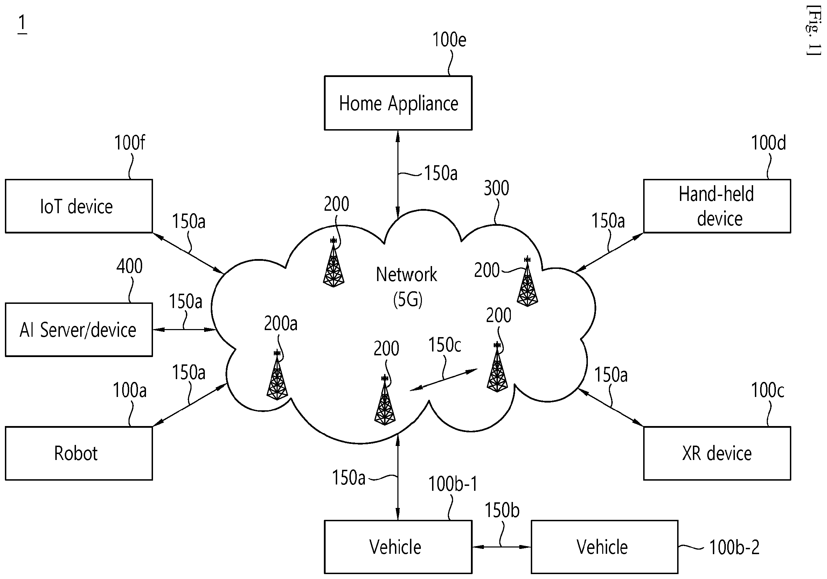

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

Here, the radio communication technologies implemented in the wireless devices in the present disclosure may include narrowband internet-of things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

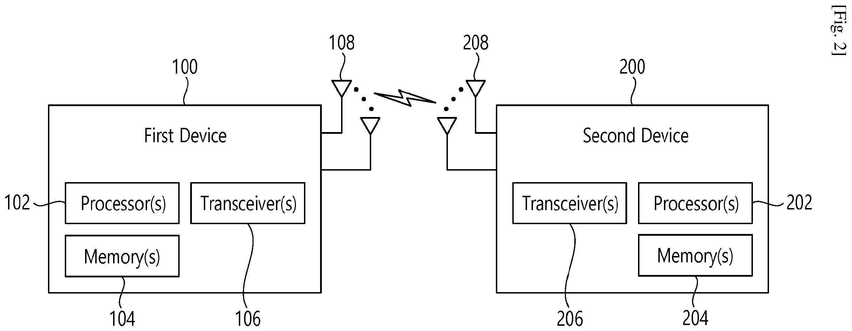

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR). In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 includes one or more processors 102 and one or more memories 104 and additionally further includes one or more transceivers 106 and may include one or more antennas 108. The processor(s) 102 may control the memory(s) 104 and/or the transceiver(s) 106 and is configured to implement the descriptions, functions, procedures, suggestions, methods and/or operational flowcharts described in the present disclosure. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 is connected to the processor(s) 102 and may store a variety of information related to operations of the processor(s) 102. The memory(s) 104 stores software code including commands for performing a part or the entirety of processes controlled by the processor(s) 102 or for performing the descriptions, functions, procedures, suggestions, methods and/or operational flowcharts described in the present disclosure. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with radio frequency (RF) unit(s). In the present disclosure, the first wireless device 100 may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, suggestions, methods and/or operational flowcharts described in the present disclosure. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, suggestions, methods and/or operational flowcharts described in the present disclosure. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 are connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas may be a plurality of physical antennas or a plurality of logical antennas (e.g., antenna ports).

The one or more transceivers 106 and 206 may convert received radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the transceivers 106 and 206 can up-convert OFDM baseband signals to a carrier frequency by their (analog) oscillators and/or filters under the control of the processors 102 and 202 and transmit the up-converted OFDM signals at the carrier frequency. The transceivers 106 and 206 may receive OFDM signals at a carrier frequency and down-convert the OFDM signals into OFDM baseband signals by their (analog) oscillators and/or filters under the control of the transceivers 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

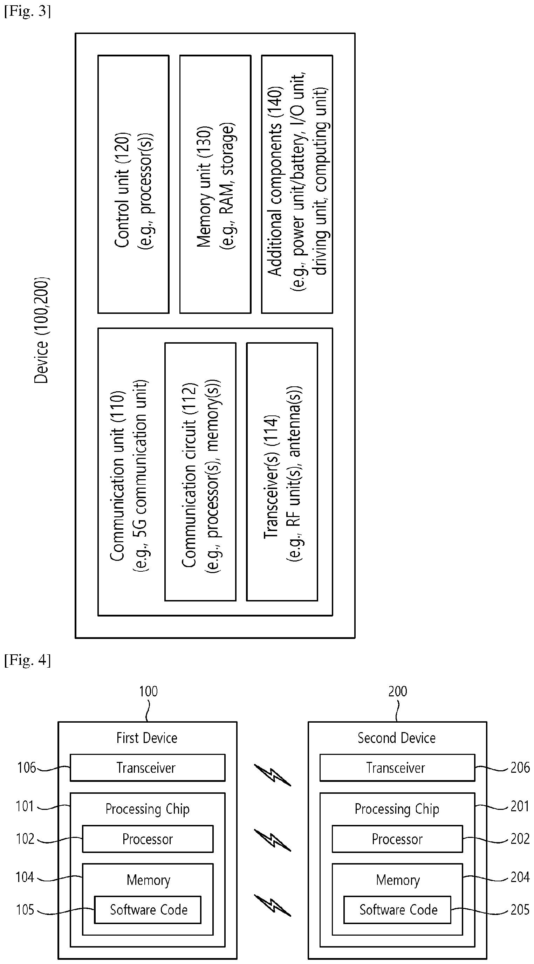

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 includes a communication circuit 112 and transceiver(s) 114. The communication circuit 112 includes the one or more processors 102 and 202 of FIG. 2 and/or the one or more memories 104 and 204 of FIG. 2. The transceiver(s) 114 includes the one or more transceivers 106 and 206 of FIG. 2 and/or the one or more antennas 108 and 208 of FIG. 2. The control unit 120 is electrically connected to the communication unit 110, the memory 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory 130 may be configured by a RAM, a DRAM, a ROM, a flash memory, a volatile memory, a non-volatile memory, and/or a combination thereof.

FIG. 4 shows another example of wireless devices to which implementations of the present disclosure is applied.

Referring to FIG. 4, wireless devices 100 and 200 may correspond to the wireless devices 100 and 200 of FIG. 2 and may be configured by various elements, components, units/portions, and/or modules.

The first wireless device 100 includes at least one transceiver, such as a transceiver 106, and at least one processing chip, such as a processing chip 101. The processing chip 101 includes at least one processor, such a processor 102, and at least one memory, such as a memory 104. The memory 104 is operably connectable to the processor 102. The memory 104 stores various types of information and/or instructions. The memory 104 stores a software code 105 which implements instructions that, when executed by the processor 102, perform the descriptions, functions, procedures, suggestions, methods and/or operational flowcharts disclosed in the present disclosure. The software code 105 implements instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 may perform one or more layers of the radio interface protocol.

The second wireless device 200 may include at least one transceiver, such as a transceiver 206, and at least one processing chip, such as a processing chip 201. The processing chip 201 may include at least one processor, such a processor 202, and at least one memory, such as a memory 204. The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions methods and/or operational flowcharts disclosed in the present disclosure. For example, the software code 205 may control the processor 202 to perform one or more protocols. For example, the software code 205 may control the processor 202 may perform one or more layers of the radio interface protocol.

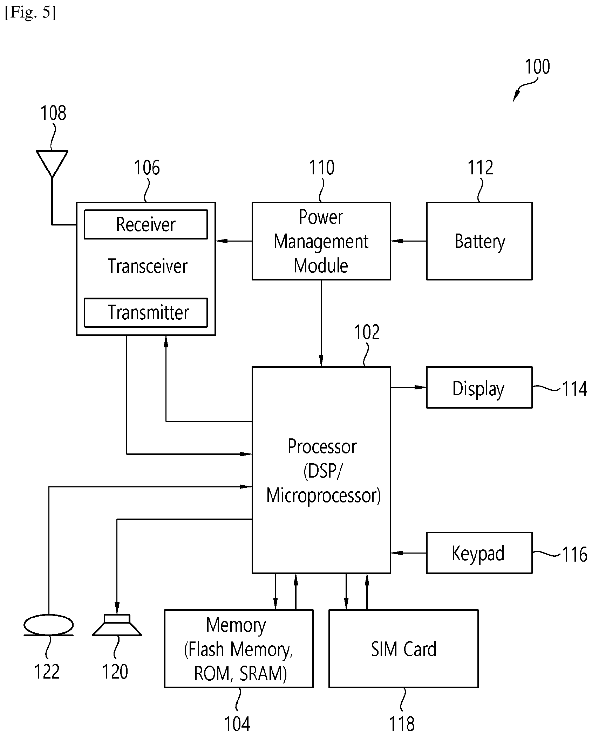

FIG. 5 shows an example of UE to which implementations of the present disclosure is applied.

Referring to FIG. 5, a LTE 100 may correspond to the first wireless device 100 of FIG. 2 and/or the first wireless device 100 of FIG. 4.

A UE 100 includes a processor 102, a memory 104, a transceiver 106, one or more antennas 108, a power management module 110, a battery 1112, a display 114, a keypad 116, a subscriber identification module (SIM) card 118, a speaker 120, and a microphone 122.

The processor 102 is configured to implement the descriptions, functions, procedures, suggestions, methods and/or operational flowcharts disclosed in the present disclosure. The processor 102 may be configured to control one or more other components of the LTE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 16 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

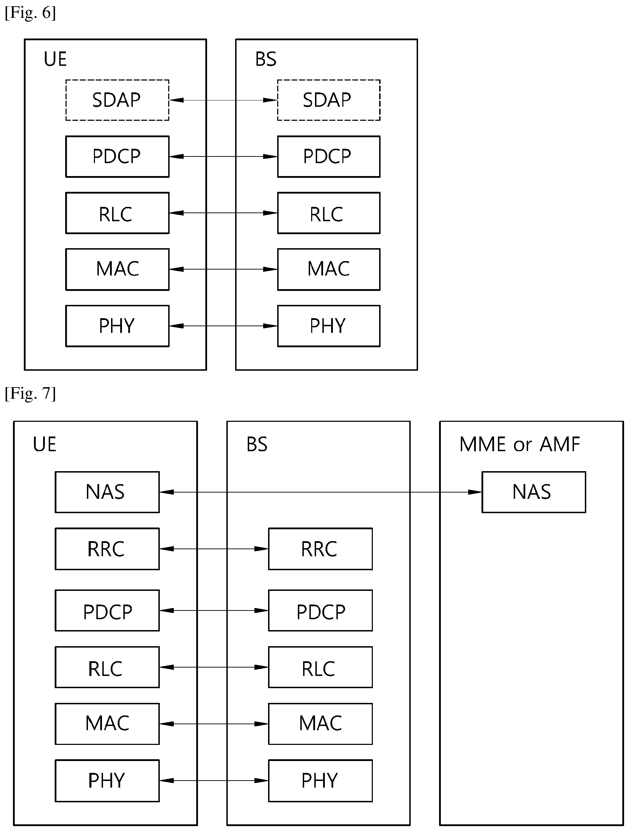

FIGs. 6 and 7 show an example of protocol stacks in a 3GPP based wireless communication system to which implementations of the present disclosure is applied.

In particular, FIG. 6 illustrates an example of a radio interface user plane protocol stack between a LTE and a BS and FIG. 7 illustrates an example of a radio interface control plane protocol stack between a UE and a BS. The control plane refers to a path through which control messages used to manage call by a LTE and a network are transported. The user plane refers to a path through which data generated in an application layer, for example, voice data or Internet packet data are transported. Referring to FIG. 6, the user plane protocol stack may be divided into Layer 1 (i.e., a PHY layer) and Layer 2. Referring to FIG. 7, the control plane protocol stack may be divided into Layer 1 (i.e., a PHY layer), Layer 2, Layer 3 (e.g., an RRC layer), and a non-access stratum (NAS) layer. Layer 1, Layer 2 and Layer 3 are referred to as an access stratum (AS).

In the 3GPP LTE system, the Layer 2 is split into the following sublayers: MAC, RLC, and PDCP. In the 3GPP NR system, the Layer 2 is split into the following sublayers: MAC, RLC, PDCP and SDAP. The PHY layer offers to the MAC sublayer transport channels, the MAC sublayer offers to the RLC sublayer logical channels, the RLC sublayer offers to the PDCP sublayer RLC channels, the PDCP sublayer offers to the SDAP sublayer radio bearers. The SDAP sublayer offers to 5G core network quality of service (QoS) flows.

In the 3GPP NR system, the main services and functions of the MAC sublayer include: mapping between logical channels and transport channels; multiplexing/de-multiplexing of MAC SDUs belonging to one or different logical channels into/from transport blocks (TB) delivered to/from the physical layer on transport channels; scheduling information reporting; error correction through hybrid automatic repeat request (HARQ) (one HARQ entity per cell in case of carrier aggregation (CA)); priority handling between LTEs by means of dynamic scheduling; priority handling between logical channels of one LTE by means of logical channel prioritization; padding. A single MAC entity may support multiple numerologies, transmission timings and cells. Mapping restrictions in logical channel prioritization control which numerology(ies), cell(s), and transmission timing(s) a logical channel can use.

Different kinds of data transfer services are offered by MAC. To accommodate different kinds of data transfer services, multiple types of logical channels are defined, i.e., each supporting transfer of a particular type of information. Each logical channel type is defined by what type of information is transferred. Logical channels are classified into two groups: control channels and traffic channels. Control channels are used for the transfer of control plane information only, and traffic channels are used for the transfer of user plane information only. Broadcast control channel (BCCH) is a downlink logical channel for broadcasting system control information, paging control channel (PCCH) is a downlink logical channel that transfers paging information, system information change notifications and indications of ongoing public warning service (PWS) broadcasts, common control channel (CCCH) is a logical channel for transmitting control information between UEs and network and used for UEs having no RRC connection with the network, and dedicated control channel (DCCH) is a point-to-point bi-directional logical channel that transmits dedicated control information between a UE and the network and used by UEs having an RRC connection. Dedicated traffic channel (DTCH) is a point-to-point logical channel, dedicated to one LTE, for the transfer of user information. A DTCH can exist in both uplink and downlink. In downlink, the following connections between logical channels and transport channels exist: BCCH can be mapped to broadcast channel (BCH); BCCH can be mapped to downlink shared channel (DL-SCH); PCCH can be mapped to paging channel (PCH); CCCH can be mapped to DL-SCH; DCCH can be mapped to DL-SCH; and DTCH can be mapped to DL-SCH. In uplink, the following connections between logical channels and transport channels exist: CCCH can be mapped to uplink shared channel (UL-SCH); DCCH can be mapped to UL-SCH; and DTCH can be mapped to UL-SCH.

The RLC sublayer supports three transmission modes: transparent mode (TM), unacknowledged mode (UM), and acknowledged node (AM). The RLC configuration is per logical channel with no dependency on numerologies and/or transmission durations. In the 3GPP NR system, the main services and functions of the RLC sublayer depend on the transmission mode and include: transfer of upper layer PDUs; sequence numbering independent of the one in PDCP (UM and AM); error correction through ARQ (AM only); segmentation (AM and UM) and resegmentation (AM only) of RLC SDUs; reassembly of SDU (AM and UM); duplicate detection (AM only); RLC SDU discard (AM and UM); RLC re-establishment; protocol error detection (AM only).

In the 3GPP NR system, the main services and functions of the PDCP sublayer for the user plane include: sequence numbering; header compression and decompression using robust header compression (ROHC); transfer of user data; reordering and duplicate detection; in-order delivery; PDCP PDU routing (in case of split bearers); retransmission of PDCP SDUs; ciphering, deciphering and integrity protection; PDCP SDU discard; PDCP re-establishment and data recovery for RLC AM; PDCP status reporting for RLC AM; duplication of PDCP PDUs and duplicate discard indication to lower layers. The main services and functions of the PDCP sublayer for the control plane include: sequence numbering; ciphering, deciphering and integrity protection; transfer of control plane data; reordering and duplicate detection; in-order delivery; duplication of PDCP PDUs and duplicate discard indication to lower layers.

In the 3GPP NR system, the main services and functions of SDAP include: mapping between a QoS flow and a data radio bearer; marking QoS flow ID (QFI) in both DL and UL packets. A single protocol entity of SDAP is configured for each individual PDU session.

In the 3GPP NR system, the main services and functions of the RRC sublayer include: broadcast of system information related to AS and NAS; paging initiated by 5GC or NG-RAN; establishment, maintenance and release of an RRC connection between the UE and NG-RAN; security functions including key management; establishment, configuration, maintenance and release of signaling radio bearers (SRBs) and data radio bearers (DRBs); mobility functions (including: handover and context transfer, UE cell selection and reselection and control of cell selection and reselection, inter-RAT mobility); QoS management functions; UE measurement reporting and control of the reporting; detection of and recovery from radio link failure; NAS message transfer to/from NAS from/to LTE.

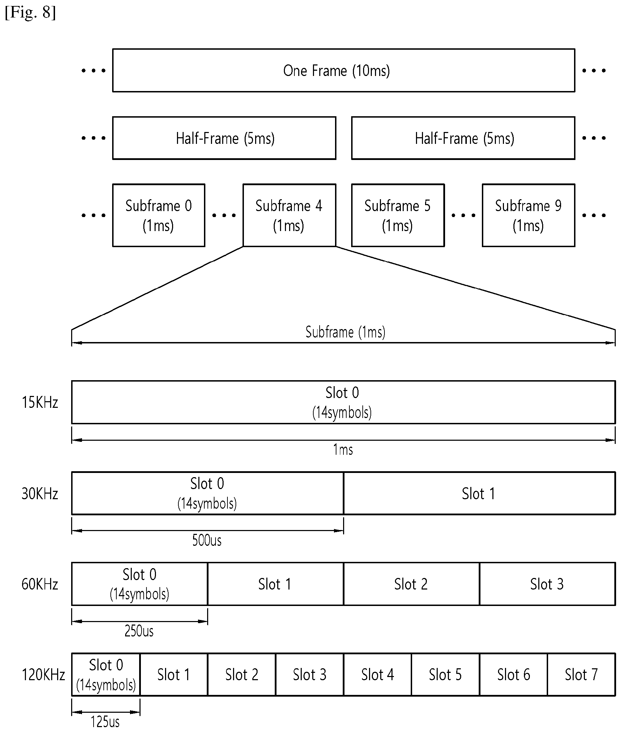

FIG. 8 shows a frame structure in a 3GPP based wireless communication system to which implementations of the present disclosure is applied.

The frame structure shown in FIG. 8 is purely exemplary and the number of subframes, the number of slots, and/or the number of symbols in a frame may be variously changed. In the 3GPP based wireless communication system, OFDM numerologies (e.g., subcarrier spacing (SCS), transmission time interval (TTI) duration) may be differently configured between a plurality of cells aggregated for one UE. For example, if a UE is configured with different SCSs for cells aggregated for the cell, an (absolute time) duration of a time resource (e.g., a subframe, a slot, or a TTI) including the same number of symbols may be different among the aggregated cells. Herein, symbols may include OFDM symbols (or CP-OFDM symbols), SC-FDMA symbols (or discrete Fourier transform-spread-OFDM (DFT-s-OFDM) symbols).

Referring to FIG. 8, downlink and uplink transmissions are organized into frames. Each frame has T_{f} = 10ms duration. Each frame is divided into two half-frames, where each of the half-frames has 5ms duration. Each half-frame consists of 5 subframes, where the duration T_{sf} per subframe is 1ms. Each subframe is divided into slots and the number of slots in a subframe depends on a subcarrier spacing. Each slot includes 14 or 12 OFDM symbols based on a cyclic prefix (CP). In a normal CP, each slot includes 14 OFDM symbols and, in an extended CP, each slot includes 12 OFDM symbols. The numerology is based on exponentially scalable subcarrier spacing Δf = 2^{u}*15 kHz.

Table 1 shows the number of OFDM symbols per slot N^{slot}_{symb}, the number of slots per frame N^{frame,u}ₛₗₒₜ, and the number of slots per subframe N^{subframe,u}ₛₗₒₜ for the normal CP, according to the subcarrier spacing Δf = 2^{u}*15 kHz.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows the number of OFDM symbols per slot N^{slot}_{symb}, the number of slots per frame N^{frame,u}ₛₗₒₜ, and the number of slots per subframe N^{subframe,u}ₛₗₒₜ for the extended CP, according to the subcarrier spacing Δf = 2^{u}*15 kHz.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

A slot includes plural symbols (e.g., 14 or 12 symbols) in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at common resource block (CRB) *N*^{start,u}_{grid} indicated by higher-layer signaling (e.g., RRC signaling), where *N*^{size,u}_{grid,x} is the number of resource blocks (RBs) in the resource grid and the subscript x is DL for downlink and LTL for uplink. *N*^{RB}_{sc} is the number of subcarriers per RB. In the 3GPP based wireless communication system, *N*^{RB}_{sc} is 12 generally. There is one resource grid for a given antenna port p, subcarrier spacing configuration *u*, and transmission direction (DL or UL). The carrier bandwidth *N*^{size,u}_{grid} for subcarrier spacing configuration *u* is given by the higher-layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the 3GPP based wireless communication system, an RB is defined by 12 consecutive subcarriers in the frequency domain.

In the 3GPP NR system, RBs are classified into CRBs and physical resource blocks (PRBs). CRBs are numbered from 0 and upwards in the frequency domain for subcarrier spacing configuration *u.* The center of subcarrier 0 of CRB 0 for subcarrier spacing configuration *u* coincides with 'point A' which serves as a common reference point for resource block grids. In the 3GPP NR system, PRBs are defined within a bandwidth part (BWP) and numbered from 0 to *N*^{size}_{BWP,i}-1, where i is the number of the bandwidth part. The relation between the physical resource block n_{PRB} in the bandwidth part i and the common resource block n_{CRB} is as follows: n_{PRB} = n_{CRB} + *N*^{size}_{BWP,i}, where *N*^{size}_{BWP,i} is the common resource block where bandwidth part starts relative to CRB 0. The BWP includes a plurality of consecutive RBs. A carrier may include a maximum of N (e.g., 5) BWPs. A UE may be configured with one or more BWPs on a given component carrier. Only one BWP among BWPs configured to the UE can active at a time. The active BWP defines the UE's operating bandwidth within the cell's operating bandwidth.

The NR frequency band may be defined as two types of frequency range, i.e., FR1 and FR2. The numerical value of the frequency range may be changed. For example, the frequency ranges of the two types (FR1 and FR2) may be as shown in Table 3 below. For ease of explanation, in the frequency ranges used in the NR system, FR1 may mean "sub 6 GHz range", FR2 may mean "above 6 GHz range," and may be referred to as millimeter wave (mmW).

**[Table 3]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 4 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 4]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In the present disclosure, the term "cell" may refer to a geographic area to which one or more nodes provide a communication system, or refer to radio resources. A "cell" as a geographic area may be understood as coverage within which a node can provide service using a carrier and a "cell" as radio resources (e.g., time-frequency resources) is associated with bandwidth which is a frequency range configured by the carrier. The "cell" associated with the radio resources is defined by a combination of downlink resources and uplink resources, for example, a combination of a DL component carrier (CC) and a UL CC. The cell may be configured by downlink resources only, or may be configured by downlink resources and uplink resources. Since DL coverage, which is a range within which the node is capable of transmitting a valid signal, and UL coverage, which is a range within which the node is capable of receiving the valid signal from the UE, depends upon a carrier carrying the signal, the coverage of the node may be associated with coverage of the "cell" of radio resources used by the node. Accordingly, the term "cell" may be used to represent service coverage of the node sometimes, radio resources at other times, or a range that signals using the radio resources can reach with valid strength at other times.

In CA, two or more CCs are aggregated. A LTE may simultaneously receive or transmit on one or multiple CCs depending on its capabilities. CA is supported for both contiguous and non-contiguous CCs. When CA is configured, the LTE only has one RRC connection with the network. At RRC connection establishment/re-establishment/handover, one serving cell provides the NAS mobility information, and at RRC connection re-establishment/handover, one serving cell provides the security input. This cell is referred to as the primary cell (PCell). The PCell is a cell, operating on the primary frequency, in which the UE either performs the initial connection establishment procedure or initiates the connection re-establishment procedure. Depending on UE capabilities, secondary cells (SCells) can be configured to form together with the PCell a set of serving cells. An SCell is a cell providing additional radio resources on top of special cell (SpCell). The configured set of serving cells for a UE therefore always consists of one PCell and one or more SCells. For dual connectivity (DC) operation, the term SpCell refers to the PCell of the master cell group (MCG) or the primary SCell (PSCell) of the secondary cell group (SCG). An SpCell supports PUCCH transmission and contention-based random access, and is always activated. The MCG is a group of serving cells associated with a master node, comprised of the SpCell (PCell) and optionally one or more SCells. The SCG is the subset of serving cells associated with a secondary node, comprised of the PSCell and zero or more SCells, for a UE configured with DC. For a UE in RRC_CONNECTED not configured with CA/DC, there is only one serving cell comprised of the PCell. For a UE in RRC_CONNECTED configured with CA/DC, the term "serving cells" is used to denote the set of cells comprised of the SpCell(s) and all SCells. In DC, two MAC entities are configured in a UE: one for the MCG and one for the SCG.

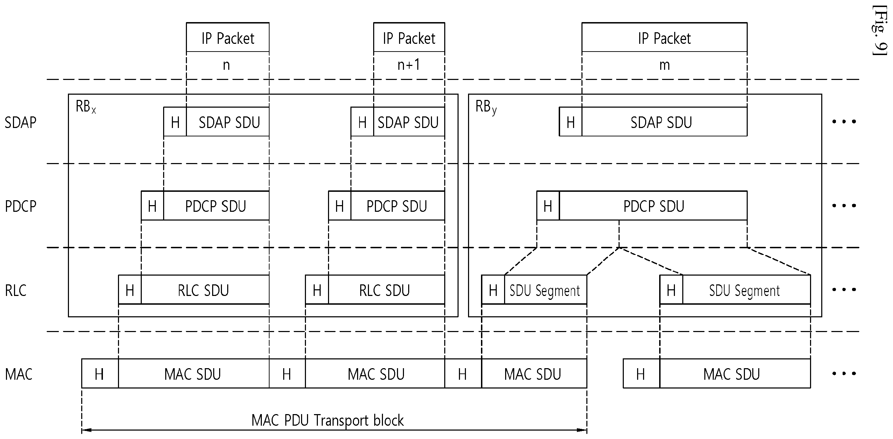

FIG. 9 shows a data flow example in the 3GPP NR system to which implementations of the present disclosure is applied.

Referring to FIG. 9, "RB" denotes a radio bearer, and "H" denotes a header. Radio bearers are categorized into two groups: DRBs for user plane data and SRBs for control plane data. The MAC PDU is transmitted/received using radio resources through the PHY layer to/from an external device. The MAC PDU arrives to the PHY layer in the form of a transport block.

In the PHY layer, the uplink transport channels UL-SCH and RACH are mapped to their physical channels physical uplink shared channel (PUSCH) and physical random access channel (PRACH), respectively, and the downlink transport channels DL-SCH, BCH and PCH are mapped to physical downlink shared channel (PDSCH), physical broadcast channel (PBCH) and PDSCH, respectively. In the PHY layer, uplink control information (UCI) is mapped to physical uplink control channel (PUCCH), and downlink control information (DCI) is mapped to physical downlink control channel (PDCCH). A MAC PDU related to UL-SCH is transmitted by a UE via a PUSCH based on an UL grant, and a MAC PDU related to DL-SCH is transmitted by a BS via a PDSCH based on a DL assignment.

Mobility in RRC_CONNECTED is described. Section 9.2.3 of 3GPP TS 38.300 V15.6.0 (2019-06) can be referred.

Network controlled mobility applies to UEs in RRC_CONNECTED and is categorized into two types of mobility: cell level mobility and beam level mobility.

Cell level mobility requires explicit RRC signaling to be triggered, i.e., handover.

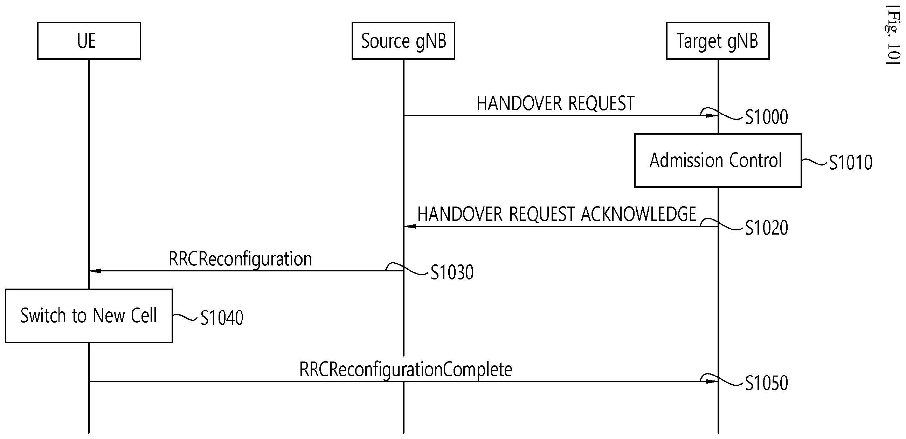

FIG. 10 shows an example of inter-gNB handover procedures to which implementations of the present disclosure is applied.

For inter-gNB handover, the signaling procedures consist of at least the following elemental components shown in FIG. 10.

In step S1000, the source gNB initiates handover and issues a Handover Request over the Xn interface.

In step S1010, the target gNB performs admission control. In step S1020, the target gNB provides the RRC configuration as part of the Handover Request Acknowledgement.

In step S1030, the source gNB provides the RRC configuration to the LTE by forwarding the *RRCReconfiguration* message received in the Handover Request Acknowledgement. The *RRCReconfiguration* message includes at least cell ID and all information required to access the target cell so that the UE can access the target cell without reading system information. For some cases, the information required for contention-based and contention-free random access can be included in the *RRCReconfiguration* message. The access information to the target cell may include beam specific information, if any.

In step S1040, the UE moves the RRC connection to the target gNB. In step S1050, the UE replies with the *RRCReconfigurationComplete.*

User data can also be sent in step S1650 if the grant allows.

The handover mechanism triggered by RRC requires the UE at least to reset the MAC entity and re-establish RLC. RRC managed handovers with and without PDCP entity re-establishment are both supported. For DRBs using RLC AM mode, PDCP can either be re-established together with a security key change or initiate a data recovery procedure without a key change. For DRBs using RLC UM mode and for SRBs, PDCP can either be re-established together with a security key change or remain as it is without a key change.

Data forwarding, in-sequence delivery and duplication avoidance at handover can be guaranteed when the target gNB uses the same DRB configuration as the source gNB.

Timer based handover failure procedure is supported in NR. RRC connection re-establishment procedure is used for recovering from handover failure.

Beam level mobility does not require explicit RRC signaling to be triggered. The gNB provides via RRC signaling the LTE with measurement configuration containing configurations of synchronization signal block (SSB)/channel state information (CSI) resources and resource sets, reports and trigger states for triggering channel and interference measurements and reports. Beam level mobility is then dealt with at lower layers by means of physical layer and MAC layer control signaling, and RRC is not required to know which beam is being used at a given point in time.

SSB-based beam level mobility is based on the SSB associated to the initial DL BWP and can only be configured for the initial DL BWPs and for DL BWPs containing the SSB associated to the initial DL BWP. For other DL BWPs, beam level mobility can only be performed based on CSI-RS.

Conditional handover (CHO) is described.

It is expected that channel conditions in NR changes rapidly considering especially in beamforming system in high frequencies. This would put obstacles in UE performing RRC level handover procedures. Compared to LTE handover performance, higher handover performance degradation is also observed. Therefore, it is necessary to overcome the shortcoming of the existing handover procedure in high frequency environment.

As a way to resolve the above difficulties in NR radio condition, it is suggested to consider handover procedure based on a configured condition (i.e., conditional handover (CHO)). The motivation for the handover procedure based on a configured condition is to reduce the time to taken for transmission of measurement reporting and reception of handover command and handover preparation so that it would be possible to reduce the handover failure caused by not receiving handover command at a proper time.

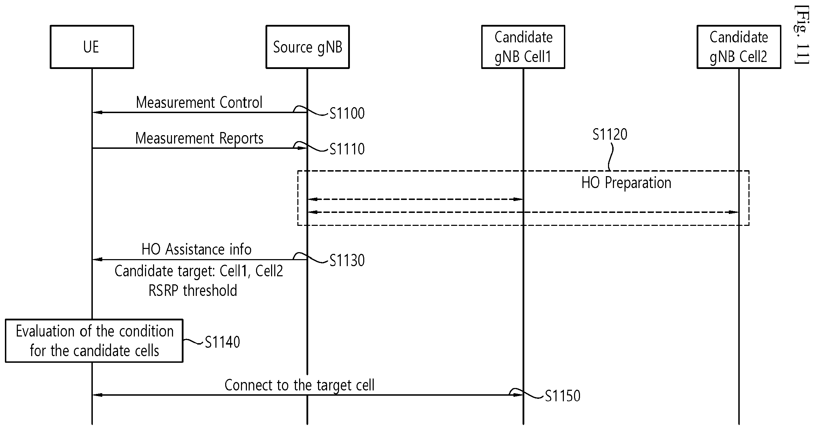

FIG. 11 shows an example of overall procedure for condition based autonomous handover procedure to which implementations of the present disclosure is applied.

In step S 1100, the source gNB may provide measurement control information to the UE. In step S1110, the LTE may transmit measurements reports based on the measurement control information.

In step S1120, the source gNB may prepare condition based autonomous handover procedure with candidate cells (e.g., Cell1 and Cell2 in FIG. 11). In step S1130, the source gNB provides handover assistance information to the UE.

The UE is provided with handover assistance information which includes set of candidate cells and conditions (e.g., reference signal received power (RSRP)) for handover. It may be possible the network prepares the candidate cells and provide the handover assistance information without the measurement report from the LTE if the network is able to know the trajectory or location of the UE based on, e.g., location reporting. Additionally, the network may determine the set of candidate cells based on the received measurement report.

There may be a concern on signaling overhead due to earlier triggering threshold. Measurement reporting may be reduced if an approach similar to blacklisted cells is introduced. In other words, if the UE reports on one cell, the network may prepare the multiple cells which is in proximity of the reported cell and provide the list of cells which are prepared. Then, the UE may not report on the cells even if the condition for measurement reporting is triggered.

The handover assistance information may be cell quality based conditions and the configuration which may be used in a target cell. The handover assistance information may include configuration for one or more candidate cells.

In step S1140, if the LTE receives the handover assistance information, the LTE initiates to evaluate the conditions for the candidate cell list to determine whether to perform handover procedure to one of the candidate cells.

In step S1150, if the condition is met, the UE performs connecting to the prepared target cell.

For this procedure, since the source gNB may not know the exact timing of UE detaching from the source gNB, there may be some unnecessary downlink transmissions from the network to the UE. To address this issue, the target gNB may indicate to source gNB that the UE has completed handover successfully so that the source gNB does not transmit to the UE anymore. In addition, if the source gNB does not receive the response for the transmitted data, the source gNB may not transmit the data in downlink considering the handover situation.

As s reserving the resource in one or more candidate cell is burdensome to the network, it may be possible for the network to manage the configuration efficiently. For instance, based on the timer associated with validity of the handover assistance information, the network and LTE may discard the configuration associated with the conditional handover. In addition, based on measurement report from the LTE, network may configure, modify and/or discard the configuration.

Furthermore, if the LTE successfully connects to the target cell, the target cell may inform to the source cell to discard the reserved configuration of the other candidate cell.

In summary, CHO is being introduced to avoid a handover failure that may happen due to, e.g., reception of handover failure. In CHO, a LTE receives a CHO command prior to actual handover timing so as to increase the probability of successful handover. The CHO command includes information indicating CHO execution condition(s) and target cell configuration(s) each corresponding to different target cell(s). After receiving CHO command, the UE evaluates CHO execution condition. If at least one target cell satisfies the CHO execution condition, the UE initiates access to the target cell using the target cell configuration for the target cell. For CHO, more than one target cell may be prepared for the handover. In case of preparation of multiple target cells for CHO, a LTE receives a CHO command including multiple target cell configurations corresponding to the prepared multiple target cells.

Meanwhile, there is a working assumption that, upon radio link failure (RLF) or upon handover failure (HOF) or upon failure to access a CHO candidate cell, the UE may perform cell selection. If the selected cell is a one of CHO candidate cells, then the UE may attempt CHO execution towards the selected cell instead of performing connection re-establishment procedure. It would be beneficial to use network resources for CHO as much as possible since the UE may succeed to access to other CHO candidate cells which are still waiting for the LTE in spite of CHO execution failure of one CHO candidate cell. Furthermore, connection re-establishment procedure may take long time and service interruption may occur. Therefore, it is better to perform CHO execution for which conditional configuration is received in the mobility command than performing connection re-establishment procedure.

However, the potential issue of performing CHO execution upon failure is how long the UE should try to CHO execution repeatedly when multiple CHO candidate cells are configured. If there are still other CHO candidate cells except the failed CHO candidate cell and the every selected cell is one of the CHO candidate cells whenever the UE performs cell selection upon failure, the LTE would perform CHO execution continuously/repeatedly until access to all CHO candidate cells fails. In other words, loop problem for CHO execution would happen.

For example, it is assumed that CHO candidate cells #1 to #4 are configured by the mobility command. Upon failure (e.g., RLF and/or HOF), the UE performs cell selection and cell #1 is selected. Since cell #1 is CHO candidate cell, the UE performs CHO execution towards cell #1. Upon failure of access to cell #1, the UE performs cell selection again and cell #2 is selected. Since cell #2 is CHO candidate cell, the LTE performs CHO execution towards cell #2, and so on. Until cell #3 and cell #4 are selected and access to cell #3 and cell #4 fails, cell selection and CHO execution towards the selected cell is repeatedly performed.

The above issue may not be just rare case because of the next two reason.

Firstly, the LTE would mostly select one of CHO candidate cells in cell selection upon declaring RLF and/or HOF, because the CHO candidate cells were chosen by measurement reporting by the LTE. That is, probably the CHO candidate cells have a good quality to perform mobility. In the UE point of view, the CHO candidate cells would still good cells and meet the cell selection criterion even though access to one CHO candidate cell fails.

Secondly, there is generally lack of valid HO preparation period of the network resources per each CHO candidate cell, since the LTE would waste lots of time to perform measurement to CHO execution and HO trail. In addition, the LTE would not know remaining time for maintaining HO preparation for each CHO candidate cell. The UE may keep trying to access to another CHO candidate cell which meets the cell selection criterion for resuming CHO execution even though all CHO candidate cells already released the network resources for CHO.

To avoid the loop problem for CHO execution described above, a method for properly stopping the CHO execution between the network and the UE when the multiple CHO candidate cells are configured should be designed.

According to the invention, the LTE receives a mobility command (e.g., CHO command) including information on whether to allow perform conditional mobility execution after detecting failure. Based on the received information in the mobility command, after detecting failure, the LTE performs cell selection, and if the selected cell is one of candidate cells for conditional mobility, the UE performs a conditional mobility execution towards the selected cell.

According to some implementations of the present disclosure, the failure may include at least one of RLF detected on a serving cell, HOF due to, e.g., expiry of HO validity timer (e.g., T304) and/or failure of access to a candidate cell for conditional mobility.

The mobility command includes a value to indicate allowed number of conditional mobility executions after detecting failure. Upon receiving the value in the mobility command, the LTE may set the value as the maximum number of (re-)trials for conditional mobility execution after detecting failure.

According to some implementations of the present disclosure, the mobility command may include information on whether to allow perform conditional mobility execution up to the maximum number of (re-)trials for conditional mobility execution after detecting failure.

Based on the received information in the mobility command, after detecting failure, the LTE performs cell selection, and if the selected cell is one of candidate cells for conditional mobility, the UE performs a conditional mobility execution towards the selected cell, up to the maximum number of (re-)trials for conditional mobility execution after detecting failure. If the maximum number of (re-)trials for conditional mobility execution has reached, the UE does not perform the conditional mobility execution, and may perform a connection recovery procedure, e.g., connection re-establishment procedure.

The mobility command includes one or more mobility execution conditions (e.g., CHO conditions) and one or more target cell configurations (e.g., CHO (re-)configuration/conditional (re-)configuration), each of which corresponds to each of candidate target cells for conditional mobility. The one or more target cell configurations may include information on HO validity timer (e.g., T304). Each of the one or more mobility execution conditions may be configured for each of candidate target cells for conditional mobility, respectively.

According to some implementations of the present disclosure, the LTE performs measurement based on the mobility execution condition to execute conditional mobility. That is, the LTE evaluates the one or more mobility execution conditions to execute conditional mobility. When at least one of the one or more candidate target cells meets at least one of the one or more mobility execution conditions, the UE tries to access to a corresponding target cell (e.g., performing random access procedure with the corresponding target cell). The UE starts the HO validity timer.

If HOF occurs due to e.g., expiry of HO validity timer and/or RLF is declared on the source cell while attempting access to a target cell, the LTE checks whether it is possible (and/or allowed) to perform conditional mobility execution after detecting failure. In other words, the LTE checks whether it is possible (and/or allowed) to retry conditional mobility execution up to the maximum number of (re-)trials for conditional mobility execution after detecting failure.

If the number of (re-)trials for conditional mobility execution after detecting failure does not exceed the maximum number of (re-)trials for conditional mobility execution after detecting failure, the UE performs cell selection and when the selected cell is one of the candidate target cells for conditional mobility in the mobility command, the LTE retries conditional mobility execution to the selected cell. That is, the UE performs conditional mobility execution towards the selected cell using a target cell configuration corresponding to the selected cell included in the mobility command.

According to some implementations of the present disclosure, cell selection may be performed before checking whether it is possible (and/or allowed) to perform conditional mobility execution after detecting failure and/or whether it is possible (and/or allowed) to retry conditional mobility execution up to the maximum number of (re-)trials for conditional mobility execution after detecting failure.

According to some implementations of the present disclosure, if the number of (re-)trials for conditional mobility execution after detecting failure exceeds the maximum number of (re-)trials for conditional mobility execution after detecting failure, the LTE releases the mobility command and initiates RRC connection re-establishment procedure.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

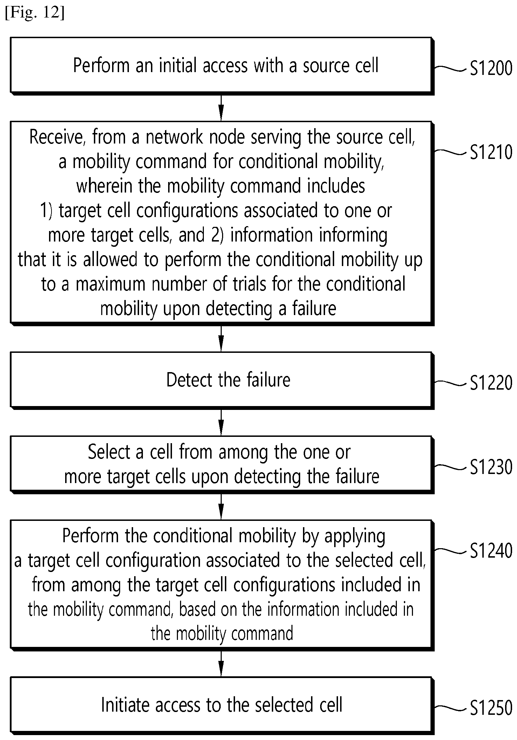

FIG. 12 shows an example of a method performed by a wireless device configured to operate in a wireless communication system to which implementations of the present disclosure is applied.

In step S1200, the wireless device performs an initial access with a source cell.

In step S1210, the wireless device receives, from a network node serving the source cell, a mobility command for conditional mobility. The mobility command includes 1) target cell configurations associated to one or more target cells, and 2) information informing that it is allowed to perform the conditional mobility up to a maximum number of trials for the conditional mobility upon detecting a failure.

The maximum number of trials for the conditional mobility is 1.

For example, the mobility command for conditional mobility may be *ConditionalReconfiguration* information element (IE) included in *RRCReconfiguration* message generated by the network node serving the source cell. Or, the mobility command for conditional mobility may be *RRCReconfiguration* message itself generated by the network node serving the source cell.

For example, the target cell configurations associated to one or more target cells may be *condRRCReconfig* field included in the *ConditionalReconfiguration* IE. The *condRRCReconfig* field may include *RRCReconfiguration* message generated by each of the one or more target cells, i.e., conditional handover command generated by each of the one or more target cells.

For example, the information informing that it is allowed to perform the conditional mobility up to the maximum number of trials for the conditional mobility upon detecting the failure may be *attemptCondReconfig* field included in the *ConditionalReconfiguration* IE. The *attemptCondReconfig* field may indicate that the wireless device performs conditional reconfiguration (i.e., conditional mobility) if selected cell is a target candidate cell of the conditional mobility and the number of (re-)trials for the conditional mobility has not reached to the maximum number of trials for the conditional mobility upon detecting the failure.

In step S1220, the wireless device detects the failure.

According to a variant that is not claimed, the failure may be RLF detected on the source cell. Operations of the wireless device related to the RLF may be as follows.

For detection of physical layer problems in RRC_CONNECTED, the wireless device shall:
1> if any dual active protocol stack (DAPS) bearer is configured, upon receiving N310 consecutive "out-of-sync" indications for the source SpCell from lower layers while T304 is running:
   2> start timer T310 for the sourceSpCell.
1> upon receiving N310 consecutive "out-of-sync" indications for the SpCell from lower layers while neither T300, T301, T304, T311, T316 nor T319 are running:
   2> start timer T310 for the corresponding SpCell.

For detection of radio link failure, the wireless device shall:
1> if any DAPS bearer is configured:
   2> upon T310 expiry in source SpCell; or
   2> upon random access problem indication from source MCG MAC; or
   2> upon indication from source MCG RLC that the maximum number of retransmissions has been reached; or
   2> upon consistent uplink listen-before-talk (LBT) failure indication from source MCG MAC:
      3> consider radio link failure to be detected for the source MCG i.e. source RLF;
      3> suspend the transmission of all DRBs in the source MCG;
      3> reset MAC for the source MCG;
      3> release the source connection.
1> else:
   2> upon T310 expiry in PCell; or
   2> upon T312 expiry in PCell; or
   2> upon random access problem indication from MCG MAC while neither T300, T301, T304, T311 nor T319 are running; or
   2> upon indication from MCG RLC that the maximum number of retransmissions has been reached; or
   2> if connected as an integrated access and backhaul (IAB)-node, upon backhaul (BH) RLF indication received on backhaul adaptation protocol (BAP) entity from the MCG; or
   2> upon consistent uplink LBT failure indication from MCG MAC while T304 is not running:
      3> if the indication is from MCG RLC and CA duplication is configured and activated, and for the corresponding logical channel *allowedServingCells* only includes SCell(s):
         4> initiate the failure information procedure to report RLC failure.
      3> else:
         4> consider radio link failure to be detected for the MCG i.e. RLF;
         4> discard any segments of segmented RRC messages.

As claimed, the failure is a conditional mobility failure to one of the one or more target cells. Operations of the wireless device related to the conditional mobility failure and/or handover failure may be as follows.

The wireless device shall:
1> if T304 of the MCG expires:
   2> release dedicated preambles provided in *rach-ConfigDedicated* if configured;
   2> release dedicated msgA PUSCH resources provided in *rach-ConfigDedicated* if configured;
   2> if any DAPS bearer is configured, and radio link failure is not detected in the source PCell:
      3> release target PCell configuration;
      3> reset MAC for the target PCell and release the MAC configuration for the target PCell;
      3> for each DAPS bearer:
         4> release the RLC entity or entities, and the associated logical channel for the target PCell;
         4> reconfigure the PDCP entity to release DAPS;
      3> for each SRB:
         4> if the *masterKeyUpdate* was not received:
            5> configure the PDCP entity for the source PCell with state variables continuation, the state variables as the PDCP entity for the target PCell;
         4> release the PDCP entity for the target PCell;
         4> release the RLC entity, and the associated logical channel for the target PCell;
         4> trigger the PDCP entity to perform SDU discard;
         4> re-establish the RLC entity for the source PCell;
      3> release the physical channel configuration for the target PCell;
      3> revert back to the SDAP configuration used in the source PCell;
      3> discard the keys used in target PCell (the K_{gNB} key, the K_{RRCenc} key, the K_{RRCint} key, the K_{UPint} key and the K_{UPenc} key), if any;
      3> resume suspended SRBs in the source PCell;
      3> for each non DAPS bearer:
         4> revert back to the UE configuration used for the DRB in the source PCell, includes PDCP, RLC states variables, the security configuration and the data stored in transmission and reception buffers in PDCP and RLC entities ;
      3> revert back to the UE measurement configuration used in the source PCell;
      3> initiate the failure information procedure to report DAPS handover failure.
   2> else:
      3> revert back to the UE configuration used in the source PCell;
      3> store the handover failure information in *VarRLF-Report*;
      3> initiate the cell selection procedure.
1> else if T304 of a secondary cell group expires:
   2> if MCG transmission is not suspended:
      3> release dedicated preambles provided in *rach-ConfigDedicated,* if configured;
      3> initiate the SCG failure information procedure to report SCG reconfiguration with sync failure, upon which the RRC reconfiguration procedure ends;
   2> else:
      3> initiate the cell selection procedure;
1> else if T304 expires when *RRCReconfiguration* is received via other RAT (HO to NR failure):
   2> reset MAC;
   2> perform the actions defined for this failure case as defined in the specifications applicable for the other RAT.

In step S1230, the wireless device selects a cell from among the one or more target cells upon detecting the failure.

In step S1240, the wireless device performs the conditional mobility by applying a target cell configuration associated to the selected cell, from among the target cell configurations included in the mobility command, based on the information included in the mobility command.

The wireless device checks whether it is possible to perform the conditional mobility up to the maximum number of trials for the conditional mobility upon detecting the failure based on the information included in the mobility command.

The wireless device performs the conditional mobility up to the maximum number of trials for the conditional mobility upon detecting the failure based on the information included in the mobility command

Upon detecting the failure (mobility failure), the wireless device selects a cell from among the one or more target cells for which the target cell configurations are configured. The wireless device may not perform a connection recovery procedure (e.g., connection re-establishment procedure). Based on the information informing that it is allowed to perform the conditional mobility up to the maximum number of trials for the conditional mobility upon detecting the failure included in the mobility command, the wireless device performs the conditional mobility by applying a target cell configuration associated to the selected cell up to the maximum number of trials for the conditional mobility upon detecting the failure.

The maximum number of trials for the conditional mobility upon detecting the failure is 1. The wireless device may perform conditional reconfiguration (e.g., conditional mobility) towards the selected cell if the selected cell is a target candidate cell of the conditional mobility and it is the first cell selection after failure.

For example, upon selecting a suitable NR cell, the wireless device shall:
1> if the cell selection is triggered by detecting radio link failure of the MCG or reconfiguration with sync failure (e.g., mobility failure) of the MCG, and
1> if *attemptCondReconfig* (e.g., information informing that it is allowed to perform the conditional mobility up to the maximum number of trials for the conditional mobility upon detecting the failure) is configured; and
1> if the selected cell is one of the candidate cells which the *reconfigurationWithSync* is included in the *masterCellGroup* in *VarConditionalReconfig* (e.g., one of the one or more target cells for which the target cell configurations are configured):
   2> apply the stored *condRRCReconfig* (e.g., apply a target cell configuration associated to the selected cell)

In step S1250, the wireless device initiates access to the selected cell.

In some implementations, the wireless device may perform a connection re-establishment procedure upon that the conditional mobility performed up to the maximum number of mobility trials fails. The wireless device may release the mobility command for the conditional mobility. Operations of the wireless device related to the connection re-establishment procedure may be as follows.
1> if wireless device is configured with *conditionalReconfiguration:*
   2> release *spCellConfig,* if configured;
   2> release the MCG SCell(s), if configured;
   2> release *delayBudgetReportingConfig,* if configured;
   2> release *overheatingAssistanceConfig* , if configured;
   2> if MR-DC is configured:
      3> perform MR-DC release;
   2> release *idc-AssistanceConfig,* if configured;
   2> release *drx-PreferenceConfig,* if configured;
   2> release *maxBW-PreferenceConfig,* if configured;
   2> release *maxCC-PreferenceConfig,* if configured;
   2> release *maxMIMO-LayerPreferenceConfig,* if configured;
   2> release *minSchedulingOffsetPreferenceConfig,* if configured;
   2> release *releasePreferenceConfig,* if configured;
   2> suspend all RBs, except SRB0;
1> remove all the entries within *VarConditionalReconfig,* if any;
1> for each *measId,* if the associated *reportConfig* has a *reportType* set to *condTriggerConfig:*
   2> for the associated *reportConfigId:*
      3> remove the entry with the matching *reportConfigId* from the *reportConfigList* within the *VarMeasConfig;*
   2> if the associated *measObjectId* is only associated to a *reportConfig* with *reportType* set to *condTriggerConfig:*
      3> remove the entry with the matching *measObjectId* from the *measObjectList* within the *VarMeasConfig;*
   2> remove the entry with the matching *measId* from the *measIdList* within the *VarMeasConfig;*
1> start timer T301;
1> apply the default L1 parameter values as specified in corresponding physical layer specifications except for the parameters for which values are provided in *SIB1,*
1> apply the default MAC Cell Group configuration;
1> apply the CCCH configuration;
1> apply the *timeAlignmentTimerCommon* included in *SIB1,*
1> initiate transmission of the *RRCReestablishmentRequest* message;

This procedure applies also if the wireless device returns to the source PCell.

Upon selecting an inter-RAT cell, the wireless device shall:
1> perform the actions upon going to RRC_IDLE, with release cause 'RRC connection failure'.

The wireless device shall set the contents of *RRCReestablishmentRequest* message as follows:
1> if the procedure was initiated due to radio link failure or handover failure:
   2> set the *reestablishmentCellId* in the *VarRLF-Report* to the global cell identity of the selected cell;
1> set the *ue-Identity* as follows:
   2> set the *c-RNTI* to the C-RNTI used in the source PCell (reconfiguration with sync or mobility from NR failure) or used in the PCell in which the trigger for the re-establishment occurred (other cases);
   2> set the *physCellId* to the physical cell identity of the source PCell (reconfiguration with sync or mobility from NR failure) or of the PCell in which the trigger for the re-establishment occurred (other cases);
   2> set the *shortMAC-I* to the 16 least significant bits of the MAC-I calculated:
      3> over the ASN.1 encoded as per clause 8 (i.e., a multiple of 8 bits) *VarShortMAC-Input;*
      3> with the K_{RRCint} key and integrity protection algorithm that was used in the source PCell (reconfiguration with sync or mobility from NR failure) or of the PCell in which the trigger for the re-establishment occurred (other cases); and
      3> with all input bits for COUNT, BEARER and DIRECTION set to binary ones;
1> set the *reestablishmentCause* as follows:
   2> if the re-establishment procedure was initiated due to reconfiguration failure:
      3> set the *reestablishmentCause* to the value *reconfigurationFailure;*
   2> else if the re-establishment procedure was initiated due to intra-NR handover failure or inter-RAT mobility from NR failure:
      3> set the *reestablishmentCause* to the value *handoverFailure;*
   2> else:
      3> set the *reestablishmentCause* to the value *otherFailure;*
1> re-establish PDCP for SRB1;
1> re-establish RLC for SRB1;
1> apply the specified configuration for SRB1;
1> configure lower layers to suspend integrity protection and ciphering for SRB1;
1> resume SRB1;
1> submit the *RRCReestablishmentRequest* message to lower layers for transmission.

Upon reception of the *RRCReestablishment* by the wireless device, the wireless device shall:
1> stop timer T301;
1> consider the current cell to be the PCell;
1> store the *nextHopChainingCount* value indicated in the *RRCReestablishment* message;
1> update the K_{gNB} key based on the current K_{gNB} key or the NH, using the stored *nextHopChainingCount* value;
1> derive the K_{RRCenc} and K_{UPenc} keys associated with the previously configured *cipheringAlgorithm;*
1> derive the K_{RRCint} and K_{UPint} keys associated with the previously configured *integrityProtAlgorithm.*
1> request lower layers to verify the integrity protection of the *RRCReestablishment* message, using the previously configured algorithm and the K_{RRCint} key;
1> if the integrity protection check of the *RRCReestablishment* message fails:
   2> perform the actions upon going to RRC_IDLE, with release cause 'RRC connection failure', upon which the procedure ends;
1> configure lower layers to resume integrity protection for SRB1 using the previously configured algorithm and the K_{RRCint} key immediately, i.e., integrity protection shall be applied to all subsequent messages received and sent by the wireless device, including the message used to indicate the successful completion of the procedure;
1> configure lower layers to resume ciphering for SRB1 using the previously configured algorithm and, the K_{RRCenc} key immediately, i.e., ciphering shall be applied to all subsequent messages received and sent by the wireless device, including the message used to indicate the successful completion of the procedure;
1> release the measurement gap configuration indicated by the *measGapConfig,* if configured;
1> set the content of *RRCReestablishmentComplete* message as follows:
   2> if the wireless device has logged measurements available for NR and if the RPLMN is included in *plmn-IdentityList* stored in *VarLogMeasReport:*
      3> include the *logMeasAvailable* in the *RRCReestablishmentComplete* message;
   2> if the wireless device has Bluetooth logged measurements available and if the RPLMN is included in *plmn-IdentityList* stored in *VarLogMeasReport*:
      3> include the *logMeasAvailableBT* in the *RRCReestablishmentComplete* message;
   2> if the wireless device has WLAN logged measurements available and if the RPLMN is included in *plmn-IdentityList* stored in *VarLogMeasReport*:
      3> include the *logMeasAvailableWLAN* in the *RRCReestablishmentComplete* message;
   2> if the wireless device has connection establishment failure or connection resume failure information available in *VarConnEstFailReport* and if the RPLMN is equal to *plmn-Identity* stored in *VarConnEstFailReport*:
      3> include *connEstFailInfoAvailable* in the *RRCReestablishmentComplete* message;
   2> if the wireless device has radio link failure or handover failure information available in *VarRLF-Report* and if the RPLMN is included in *plmn-IdentityList* stored in *VarRLF-Report*; or
   2> if the wireless device has radio link failure or handover failure information available in *VarRLF-Report* and if the wireless device is capable of cross-RAT RLF reporting and if the RPLMN is included in *plmn-IdentityList* stored in *VarRLF-Report:*
      3> include *rlf-InfoAvailable* in the *RRCReestablishmentComplete* message;
1> submit the *RRCReestablishmentComplete* message to lower layers for transmission;
1> the procedure ends.

In some implementations, the wireless device may be in communication with at least one of a mobile device, a network, and/or autonomous vehicles other than the wireless device.

Furthermore, the method in perspective of the wireless device described above in FIG. 12 may be performed by first wireless device 100 shown in FIG. 2, the wireless device 100 shown in FIG. 3, the first wireless device 100 shown in FIG. 4 and/or the UE 100 shown in FIG. 5.

More specifically, the wireless device comprises at least one transceiver, at least processor, and at least one computer memory operably connectable to the at least one processor and storing instructions that, based on being executed by the at least one processor, perform corresponding operations.

In some implementations, the maximum number of trials for the conditional mobility may be pre-defined. For example, the maximum number of trials for the conditional mobility may be pre-defined as 1.

For example, the mobility command for conditional mobility may be *ConditionalReconfiguration* IE included in *RRCReconfiguration* message generated by the network node serving the source cell. Or, the mobility command for conditional mobility may be *RRCReconfiguration* message itself generated by the network node serving the source cell.

For example, the target cell configurations associated to one or more target cells may be *condRRCReconfig* field included in the *ConditionalReconfiguration* IE. The *condRRCReconfig* field may include *RRCReconfiguration* message generated by each of the one or more target cells, i.e., conditional handover command generated by each of the one or more target cells.

For example, the information informing that it is allowed to perform the conditional mobility up to the maximum number of trials for the conditional mobility upon detecting the failure may be *attemptCondReconfig* field included in the *ConditionalReconfiguration* IE. The *attemptCondReconfig* field may indicate that the wireless device performs conditional reconfiguration (i.e., conditional mobility) if selected cell is a target candidate cell of the conditional mobility and the number of (re-)trials for the conditional mobility has not reached to the maximum number of trials for the conditional mobility upon detecting the failure.

For example, the failure may be RLF detected on the source cell. For example, the failure may be a conditional mobility failure to one of the one or more target cells and/or a handover failure to a neighbor cell.

In some implementations, the wireless device may check whether it is possible to perform the conditional mobility up to the maximum number of trials for the conditional mobility upon detecting the failure based on the information included in the mobility command.

In some implementations, the wireless device performs device may perform the conditional mobility up to the maximum number of trials for the conditional mobility upon detecting the failure based on the information included in the mobility command

In some implementations, upon detecting the failure (e.g., RLF and/or mobility failure), the wireless device may select a cell from among the one or more target cells for which the target cell configurations are configured. The wireless device may not perform a connection recovery procedure (e.g., connection re-establishment procedure). Based on the information informing that it is allowed to perform the conditional mobility up to the maximum number of trials for the

Furthermore, the method in perspective of the wireless device described above in FIG. 12 may be performed by control of the processor 102 included in the first wireless device 100 shown in FIG. 2, by control of the communication unit 110 and/or the control unit 120 included in the wireless device 100 shown in FIG. 3, by control of the processor 102 included in the first wireless device 100 shown in FIG. 4 and/or by control of the processor 102 included in the LTE 100 shown in FIG. 5. pre-defined as 1.

For example, the mobility command for conditional mobility may be *ConditionalReconfiguration* IE included in *RRCReconfiguration* message generated by the network node serving the source cell. Or, the mobility command for conditional mobility may be *RRCReconfiguration* message itself generated by the network node serving the source cell.

For example, the target cell configurations associated to one or more target cells may be *condRRCReconfig* field included in the *ConditionalReconfiguration* IE. The *condRRCReconfig* field may include *RRCReconfiguration* message generated by each of the one or more target cells, i.e., conditional handover command generated by each of the one or more target cells.

For example, the information informing that it is allowed to perform the conditional mobility up to the maximum number of trials for the conditional mobility upon detecting the failure may be *attemptCondReconfig* field included in the *ConditionalReconfiguration* IE. The *attemptCondReconfig* field may indicate that the wireless device performs conditional reconfiguration (i.e., conditional mobility) if selected cell is a target candidate cell of the conditional mobility and the number of (re-)trials for the conditional mobility has not reached to the maximum number of trials for the conditional mobility upon detecting the failure.

For example, the failure may be RLF detected on the source cell. For example, the failure may be a conditional mobility failure to one of the one or more target cells and/or a handover failure to a neighbor cell.

In some implementations, the wireless device may check whether it is possible to perform the conditional mobility up to the maximum number of trials for the conditional mobility upon detecting the failure based on the information included in the mobility command.

In some implementations, the wireless device performs device may perform the conditional mobility up to the maximum number of trials for the conditional mobility upon detecting the failure based on the information included in the mobility command

In some implementations, upon detecting the failure (e.g., RLF and/or mobility failure), the wireless device may select a cell from among the one or more target cells for which the target cell configurations are configured. The wireless device may not perform a connection recovery procedure (e.g., connection re-establishment procedure). Based on the information informing that it is allowed to perform the conditional mobility up to the maximum number of trials for the conditional mobility upon detecting the failure included in the mobility command, the wireless device may perform the conditional mobility by applying a target cell configuration associated to

Furthermore, the method in perspective of the wireless device described above in FIG. 12 may be performed by a software code 105 stored in the memory 104 included in the first wireless device 100 shown in FIG. 4.

More specifically, at least one computer readable medium (CRM) stores instructions that, based on being executed by at least one processor, perform corresponding operations. *condRRCReconfig* field included in the *ConditionalReconfiguration* IE. The *condRRCReconfig* field may include *RRCReconfiguration* message generated by each of the one or more target cells, i.e., conditional handover command generated by each of the one or more target cells.

For example, the information informing that it is allowed to perform the conditional mobility up to the maximum number of trials for the conditional mobility upon detecting the failure may be *attemptCondReconfig* field included in the *ConditionalReconfiguration* IE. The *attemptCondReconfig* field may indicate that the wireless device performs conditional reconfiguration (i.e., conditional mobility) if selected cell is a target candidate cell of the conditional mobility and the number of (re-)trials for the conditional mobility has not reached to the maximum number of trials for the conditional mobility upon detecting the failure.

For example, the failure may be RLF detected on the source cell. For example, the failure may be a conditional mobility failure to one of the one or more target cells and/or a handover failure to a neighbor cell.

In some implementations, the wireless device may check whether it is possible to perform the conditional mobility up to the maximum number of trials for the conditional mobility upon detecting the failure based on the information included in the mobility command.

In some implementations, the wireless device performs device may perform the conditional mobility up to the maximum number of trials for the conditional mobility upon detecting the failure based on the information included in the mobility command

In some implementations, upon detecting the failure (e.g., RLF and/or mobility failure), the wireless device may select a cell from among the one or more target cells for which the target cell configurations are configured. The wireless device may not perform a connection recovery procedure (e.g., connection re-establishment procedure). Based on the information informing that it is allowed to perform the conditional mobility up to the maximum number of trials for the conditional mobility upon detecting the failure included in the mobility command, the wireless device may perform the conditional mobility by applying a target cell configuration associated to the selected cell up to the maximum number of trials for the conditional mobility upon detecting the failure.

For example, if the maximum number of trials for the conditional mobility upon detecting the failure is pre-defined as 1, the wireless device may perform conditional reconfiguration (e.g., conditional mobility) towards the selected cell if the selected cell is a target candidate cell of the conditional mobility and it is the first cell selection after failure.

In some implementations, the operations may further comprise performing a connection re-establishment procedure upon that the conditional mobility performed up to the maximum number of mobility trials fails. The wireless device may release the mobility command for the conditional mobility.

Furthermore, the present disclosure may be applied in perspective of a network node configured to operate in a wireless communication system. The method performed by the network node comprises performing an initial access with a wireless device, and transmitting, to the wireless device, a mobility command for conditional mobility, wherein the mobility command includes 1) target cell configurations associated to one or more target cells, and 2) information informing that it is allowed to perform the conditional mobility up to a maximum number of trials for the conditional mobility upon detecting a failure.

The conditional mobility is performed by the wireless device by applying a target cell configuration associated to a cell, from among the target cell configurations included in the mobility command, based on the information included in the mobility command. The cell is selected from among the one or more target cells upon that the failure is detected by the wireless device.

In some implementations, the maximum number of trials for the conditional mobility may be pre-defined. For example, the maximum number of trials for the conditional mobility may be pre-defined as 1.

For example, the failure may be RLF detected on the source cell. For example, the failure may be a conditional mobility failure to one of the one or more target cells and/or a handover failure to a neighbor cell.

Furthermore, the method in perspective of the network node described above may be performed by second wireless device 100 shown in FIG. 2, the device 100 shown in FIG. 3, and/or the second wireless device 200 shown in FIG. 4.

More specifically, the network node comprises at least one transceiver, at least processor, and at least one computer memory operably connectable to the at least one processor and storing instructions that, based on being executed by the at least one processor, perform operations.

The operations comprise performing an initial access with a wireless device, and transmitting, to the wireless device, a mobility command for conditional mobility, wherein the mobility command includes 1) target cell configurations associated to one or more target cells, and 2) information informing that it is allowed to perform the conditional mobility up to a maximum

FIG. 13 shows an example of a conditional mobility upon conditional mobility execution failure to which implementations of the present disclosure is applied.

In step S1300, the UE performs initial access with a source cell, i.e., cell #1.

In some implementations, the UE may establish a connection with network (e.g. gNB). The LTE may perform initial access towards the cell. The LTE and the cell may perform RACH procedure. The UE may establish or resume a connection with the gNB and enters RRC_CONNECTED. The UE may perform AS security activation upon receiving Security Mode Command from the gNB. The UE may configure radio bearers and radio configuration upon receiving RRC reconfiguration or resumes radio bearers and radio configuration upon receiving RRC resume. The cell #1 becomes the source cell of mobility.

In step S1310, the LTE receives a mobility command (e.g., CHO command) for conditional mobility from the source cell.

In some implementations, the mobility command includes one or more mobility execution conditions (e.g., CHO execution condition) and one or more target cell configurations including HO validity timers to declare handover failure, i.e., HOF. Each of the one or more target cell configurations may be mapped to each of different target cells.

In some implementations, the mobility command may include an indication to inform that it is allowed to retry conditional mobility execution when the legacy handover fails. That is, when the network provides the legacy handover command after transmitting the mobility command for conditional mobility, the handover failure may happen.

In some implementations, the mobility command may include an indication to inform that it is allowed to retry conditional mobility execution when the conditional mobility execution fails by expiry of the HO validity timer in the mobility command.

In some implementations, the mobility command may include an indication to inform that it is allowed to try conditional mobility execution when RLF is declared by the UE.

The mobility command may include a value to indicate allowed number of (re-)trials for conditional mobility to other target cells of the conditional mobility.

The value is 1.

In step S1320, for the received one or more target cell configurations, then the UE evaluates the one or more mobility execution conditions.

In step S1330, when at least one mobility execution condition is met for at least one target cell among the one or more target cells for which the mobility command for the conditional mobility is configured, the LTE applies the target cell configuration mapped to the corresponding target cell and initiates access to the corresponding target cell.

In FIG. 13, the mobility execution condition is met for target cell #1, i.e., cell #2, and the UE applies the target cell configuration mapped to cell #2 and initiates access to cell #2. The UE starts the HO validity timer.

In step S1340, upon expiry of the HO validity timer, the UE reverts to apply the source cell configuration and checks whether it is possible to retry conditional mobility execution upon mobility failure to cell #2 by using the allowed number of (re-)trials for conditional mobility, which is configured by the network in the mobility command.

In step S1350, if the actual number of conditional mobility execution (re-)trials doesn't exceed the allowed number of (re-)trials for conditional mobility, the UE performs cell selection. In other words, if the LTE receives the indication to inform that it is allowed to retry conditional mobility execution when the conditional mobility execution fails by expiry of the HO validity timer in the mobility command, the UE may firstly perform cell selection among the one or more target cells for conditional mobility except of the failed target cell, i.e., cell #2.

In step S1360, if the selected cell from the cell selection is one of target cells among the one or more target cells for which the mobility command for the conditional mobility is configured, the UE applies the target cell configuration mapped to the corresponding target cell and initiates access to the corresponding target cell. That is, the LTE retries conditional mobility execution towards the selected cell.

In FIG. 13, the mobility execution condition is met for target cell #2, i.e., cell #3, and the UE applies the target cell configuration mapped to cell #3 and initiates access to cell #3. The UE may start the HO validity timer.

In step S1370, upon expiry of the HO validity timer expires, the UE reverts to apply the source cell configuration and checks whether it is possible to retry conditional mobility execution upon mobility failure to cell #3. The LTE may check whether it is possible to retry conditional mobility execution by using the allowed number of (re-)trials for conditional mobility, which is configured by the network in the mobility command.

In step S1380, if the actual number of conditional mobility execution retrials has reached the allowed number of (re-)trials for conditional mobility, the UE releases the mobility command for conditional mobility and performs cell selection to initiate RRC re-establishment procedure. In this RRC re-establishment procedure, the UE does not retry conditional mobility execution even if the newly selected cell is one of target cells among the one or more target cells for which the mobility command for the conditional mobility is configured.

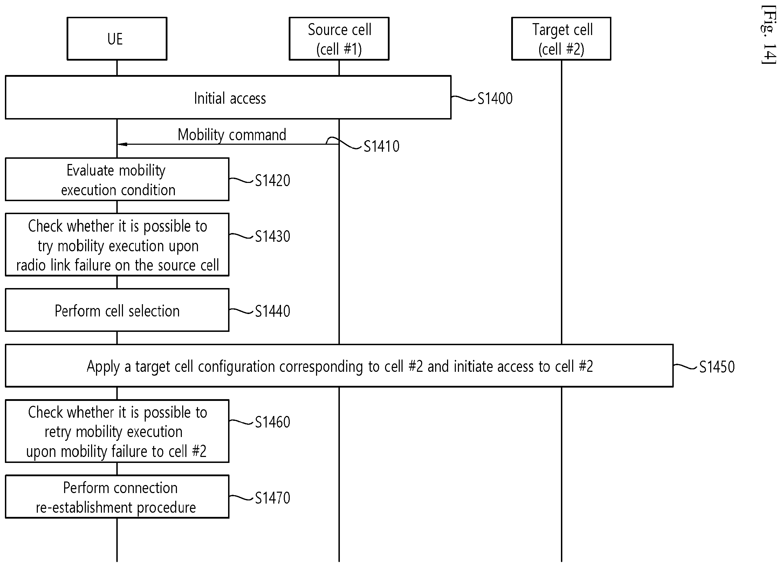

FIG. 14 shows an example of a conditional mobility upon RLF that is not claimed.

In step S1400, the UE performs initial access with a source cell, i.e., cell #1.

In some implementations, the UE may establish a connection with network (e.g. gNB). The LTE may perform initial access towards the cell. The LTE and the cell may perform RACH procedure. The UE may establish or resume a connection with the gNB and enters RRC_CONNECTED. The UE may perform AS security activation upon receiving Security Mode Command from the gNB. The UE may configure radio bearers and radio configuration upon receiving RRC reconfiguration or resumes radio bearers and radio configuration upon receiving RRC resume. The cell #1 becomes the source cell of mobility.

In step S1410, the LTE receives a mobility command (e.g., CHO command) for conditional mobility from the source cell.

In some implementations, the mobility command may include one or more mobility execution conditions (e.g., CHO execution condition) and one or more target cell configurations including HO validity timers to declare handover failure, i.e., HOF. Each of the one or more target cell configurations may be mapped to each of different target cells.

In some implementations, the mobility command may include an indication to inform that it is allowed to retry conditional mobility execution when the legacy handover fails. That is, when the network provides the legacy handover command after transmitting the mobility command for conditional mobility, the handover failure may happen.

In some implementations, the mobility command may include an indication to inform that it is allowed to retry conditional mobility execution when the conditional mobility execution fails by expiry of the HO validity timer in the mobility command.

In some implementations, the mobility command may include an indication to inform that it is allowed to try conditional mobility execution when RLF is declared by the UE.

In some implementations, the mobility command may include a value to indicate allowed number of (re-)trials for conditional mobility to other target cells of the conditional mobility.

In some implementations, the allowed number of (re-)trials for conditional mobility may not be included in the mobility command. In this case, the allowed number of (re-)trials for conditional mobility may be set as a predefined value between the network and the UE. The predefined value may be 0 and more (e.g., 1).

In step S1420, for the received one or more target cell configurations, then the UE evaluates the one or more mobility execution conditions.

In step S1430, when the RLF is detected/declared on the source cell, the LTE stops evaluating the one or more mobility execution conditions and checks whether it is possible to try conditional mobility execution upon RLF. The LTE may check whether it is possible to try conditional mobility execution by using the allowed number of (re-)trials for conditional mobility, which is configured by the network in the mobility command and/or pre-defined.

In step S1440, if the actual number of conditional mobility execution (re-)trials doesn't exceed the allowed number of (re-)trials for conditional mobility, the UE performs cell selection. In other words, if the LTE receives the indication to inform that it is allowed to try conditional mobility execution when RLF is declared by the UE, the LTE may firstly perform cell selection among the one or more target cells for conditional mobility except of the failed target cell.

In step S1450, if the selected cell from the cell selection is one of target cells among the one or more target cells for which the mobility command for the conditional mobility is configured, the UE applies the target cell configuration mapped to the corresponding target cell and initiates access to the corresponding target cell. That is, the UE tries conditional mobility execution towards the selected cell.

In FIG. 14, the mobility execution condition is met for target cell, i.e., cell #2, and the UE applies the target cell configuration mapped to cell #3 and initiates access to cell #2. The UE may start the HO validity timer.

In step S1460, upon expiry of the HO validity timer expires, the UE reverts to apply the source cell configuration and checks whether it is possible to retry conditional mobility execution upon mobility failure to cell #2. The LTE may check whether it is possible to retry conditional mobility execution by using the allowed number of (re-)trials for conditional mobility, which is configured by the network in the mobility command and/or pre-defined.

In step S1470, if the actual number of conditional mobility execution retrials has reached the allowed number of (re-)trials for conditional mobility, the UE releases the mobility command for conditional mobility and performs cell selection to initiate RRC re-establishment procedure. In this RRC re-establishment procedure, the UE does not retry conditional mobility execution even if the newly selected cell is one of target cells among the one or more target cells for which the mobility command for the conditional mobility is configured.

In the present disclosure described above, CHO has been exemplary mentioned as a conditional mobility for the sake of convenience. The present disclosure can be applied to other forms of conditional mobility, such as conditional SCell change without loss of generality. Furthermore, the present disclosure can be applied to normal mobility instead of conditional mobility.

The present disclosure can have various advantageous effects.

For example, according to implementations of the present disclosure, loop problem of conditional mobility execution can be resolved.

For example, according to implementations of the present disclosure, the UE can practically use resources for conditional mobility as much as possible without additional network interworking.

For example, unless the present disclosure is applied, another approach should be needed in order to resolve the loop problem of conditional mobility execution. For example, it may need to consider additional timer to indicate end point of validity of conditional mobility configuration. The additional timer should be a common timer which is applied to all candidate cells for maintaining conditional mobility configuration. The LTE should release all conditional mobility configurations unless the UE succeeds conditional mobility execution before expiry of the additional timer. However, this approach is not practical for pressing situation to perform mobility because it requires additional interworking between the source cell and all candidate cells to introduce the additional timer and decide proper timer value especially in the most cases of mobility scenario.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method performed by a wireless device (100) configured to operate in a wireless communication system (1), the method comprising:
receiving (S1210, S13 10), from a network node serving a source cell, a conditional mobility command comprising i) mobility execution conditions for one or more target cells, ii) target cell configurations associated with the one or more target cells, and iii) information for a number of times by which the wireless device (100) is allowed to perform a cell-selection based mobility after failure, wherein the number of times is 1;
initiating (S1330) a conditional mobility to a target cell among the one or more target cells and starting a timer based on a mobility execution condition being met for the target cell;
performing the conditional mobility while the timer is running;
detecting (S1220, S1340) a failure of the conditional mobility upon an expiry of the timer; and
performing (S1230, S1240, S1350, S1360) the cell-selection based mobility after the failure of the conditional mobility,
wherein the performing (S1230, S1240, S1350, S1360) of the cell-selection based mobility comprises:
selecting (S1230, S1350) a cell meeting a cell selection criterion;
determining whether the selected cell is included in the one or more target cells; and
applying (S1240, S1360) a target cell configuration associated with the selected cell based on the selected cell being included in the one or more target cells,
wherein the method further comprises determining (S1240, S1350) whether the cell-selection based mobility is a first performed cell-selection based mobility after the failure of the conditional mobility, and
wherein the cell-selection based mobility is performed (S1230, S1240, S1350, S1360) based on the cell-selection based mobility being the first performed cell-selection based mobility after the failure of the conditional mobility.

2. The method of claim 1, further comprising:
performing (S1380) a connection re-establishment procedure based on a current number of conditional mobility trials exceeding the number of times.

3. The method of claim 2, further comprising:
releasing the conditional mobility command after the connection re-establishment procedure is initiated.

4. The method of claim 1, wherein the wireless device (100) is in communication with at least one of a mobile device, a network (300) or autonomous vehicles (100b) other than the wireless device (100).

5. The method of claim 1, wherein the timer comprises a T304 timer.

6. A wireless device (100) configured to operate in a wireless communication system (1), the wireless device (100) comprising:
at least one transceiver (106);
at least processor (102); and
at least one computer memory (104) operably connectable to the at least one processor (102) and storing instructions that, based on being executed by the at least one processor (102), perform operations comprising:
receiving (S1210, S13 10), from a network node serving a source cell, a conditional mobility command comprising i) mobility execution conditions for one or more target cells, ii) target cell configurations associated with the one or more target cells, and iii) information for a number of times by which the wireless device (100) is allowed to perform a cell-selection based mobility after failure, wherein the number of times is 1;
initiating (S1330) a conditional mobility to a target cell among the one or more target cells and starting a timer based on a mobility execution condition being met for the target cell;
performing the conditional mobility while the timer is running;
detecting (S1220, S1340) a failure of the conditional mobility upon an expiry of the timer; and
performing (S1230, S1240, S1350, S1360) the cell-selection based mobility after the failure of the conditional mobility,
wherein the performing (S1230, S1240, S1350, S1360) of the cell-selection based mobility comprises:
selecting (S1230, S1350) a cell meeting a cell selection criterion;
determining whether the selected cell is included in the one or more target cells; and
applying (S1240, S1360) a target cell configuration associated with the selected cell based on the selected cell being included in the one or more target cells,
wherein the operations further comprise determining (S1240, S1350) whether the cell-selection based mobility is a first performed cell-selection based mobility after the failure of the conditional mobility, and
wherein the cell-selection based mobility is performed (S1230, S1240, S1350, S1360) based on the cell-selection based mobility being the first performed cell-selection based mobility after the failure of the conditional mobility.

7. The wireless device (100) of claim 6, wherein the operations further comprise:
performing (S1380) a connection re-establishment procedure based on a current number of conditional mobility trials exceeding the number of times; and
releasing the conditional mobility command after the connection re-establishment procedure is initiated.

8. The wireless device (100) of claim 6, wherein the timer comprises a T304 timer.

9. At least one computer readable medium, CRM, (104) storing instructions that, based on being executed by at least one processor (102), perform operations comprising:
receiving (S1210, S1310), from a network node serving a source cell, a conditional mobility command comprising i) mobility execution conditions for one or more target cells, ii) target cell configurations associated with the one or more target cells, and iii) information for a number of times by which it is allowed to perform a cell-selection based mobility after failure, wherein the number of times is 1;
initiating (S1330) a conditional mobility to a target cell among the one or more target cells and starting a timer based on a mobility execution condition being met for the target cell;
performing the conditional mobility while the timer is running;
detecting (S1220, S1340) a failure of the conditional mobility upon an expiry of the timer; and
performing (S1230, S1240, S1350, S1360) the cell-selection based mobility after the failure of the conditional mobility,
wherein the performing (S1230, S1240, S1350, S1360) of the cell-selection based mobility comprises:
selecting (S1230, S1350) a cell meeting a cell selection criterion;
determining whether the selected cell is included in the one or more target cells; and
applying (S1240, S1360) a target cell configuration associated with the selected cell based on the selected cell being included in the one or more target cells,
wherein the operations further comprise determining (S1240, S1350) whether the cell-selection based mobility is a first performed cell-selection based mobility after the failure of the conditional mobility, and
wherein the cell-selection based mobility is performed (S1230, S1240, S1350, S1360) based on the cell-selection based mobility being the first performed cell-selection based mobility after the failure of the conditional mobility.

10. The at least one CRM (104) of claim 9, wherein the timer comprises a T304 timer.

## Patentansprüche

1. Verfahren, das von einem drahtlosen Gerät (100) durchgeführt wird, das konfiguriert ist, um in einem drahtlosen Kommunikationssystem (1) betrieben zu werden, das Verfahren umfassend:
Empfangen (S1210, S1310), von einem Netzwerkknoten, der eine Quellzelle bedient, eines bedingten Mobilitätsbefehls, umfassend i) Mobilitätsausführungsbedingungen für eine oder mehrere Zielzellen, ii) Zielzellenkonfigurationen, die der einen oder mehreren Zielzellen zugeordnet sind, und iii) Informationen über die Häufigkeit, mit der das drahtlose Gerät (100) nach einem Ausfall eine auf Zellenauswahl basierende Mobilität durchführen darf, wobei die Häufigkeit 1 beträgt;
Einleiten (S1330) einer bedingten Mobilität zu einer Zielzelle der einen oder mehreren Zielzellen und Starten eines Zeitgebers basierend auf der Erfüllung einer Mobilitätsausführungsbedingung für die Zielzelle;
Durchführen der bedingten Mobilität, während der Zeitgeber läuft;
Erkennen (S1220, S1340) eines Fehlers der bedingten Mobilität nach Ablauf des Zeitgebers; und
Durchführen (S1230, S1240, S1350, S1360) der auf Zellenauswahl basierenden Mobilität nach dem Ausfall der bedingten Mobilität,
wobei das Durchführen (S1230, S1240, S1350, S1360) der auf Zellenauswahl basierenden Mobilität umfasst:
Auswählen (S1230, S1350) einer Zelle, die ein Zellenauswahlkriterium erfüllt;
Bestimmen, ob die ausgewählte Zelle in der einen oder mehreren Zielzellen enthalten ist; und
Anwenden (S1240, S1360) einer Zielzellenkonfiguration, die der ausgewählten Zelle zugeordnet ist, basierend darauf, dass die ausgewählte Zelle in der einen oder mehreren Zielzellen enthalten ist,
wobei das Verfahren ferner das Bestimmen (S1240, S1350) umfasst, ob die auf Zellenauswahl basierende Mobilität eine auf Zellenauswahl basierende Mobilität ist, die erstmalig nach dem Ausfall der bedingten Mobilität durchgeführt wird, und
wobei die auf Zellenauswahl basierende Mobilität basierend darauf durchgeführt wird (S1230, S1240, S1350, S1360), dass die auf Zellenauswahl basierende Mobilität eine auf Zellenauswahl basierende Mobilität ist, die erstmalig nach dem Ausfall der bedingten Mobilität durchgeführt wird.

2. Verfahren nach Anspruch 1, ferner umfassend:
Durchführen (S1380) einer Verbindungswiederherstellungsprozedur basierend auf einer aktuellen Anzahl bedingter Mobilitätsversuche, die die Häufigkeit überschreitet.

3. Verfahren nach Anspruch 2, ferner umfassend:
Freigeben des bedingten Mobilitätsbefehls, nachdem die Verbindungswiederherstellungsprozedur eingeleitet wurde.

4. Verfahren nach Anspruch 1, wobei das drahtlose Gerät (100) mit mindestens einem von einem mobilen Gerät, einem Netzwerk (300) oder autonomem Fahrzeug (100b) außer dem drahtlosen Gerät (100) kommuniziert.

5. Verfahren nach Anspruch 1, wobei der Zeitgeber einen T304-Zeitgeber umfasst.

6. Drahtloses Gerät (100), das konfiguriert ist, um in einem drahtlosen Kommunikationssystem (1) betrieben zu werden, das drahtlose Gerät (100) umfassend:
mindestens einen Transceiver (106);
mindestens einen Prozessor (102); und
mindestens einen Computerspeicher (104), der operativ mit dem mindestens einen Prozessor (102) verbindbar ist und Anweisungen speichert, die, basierend auf der Ausführung durch den mindestens einen Prozessor (102), Operationen durchführen, die umfassen:
Empfangen (S1210, S1310), von einem Netzwerkknoten, der eine Quellzelle bedient, eines bedingten Mobilitätsbefehls, umfassend i) Mobilitätsausführungsbedingungen für eine oder mehrere Zielzellen, ii) Zielzellenkonfigurationen, die der einen oder mehreren Zielzellen zugeordnet sind, und iii) Informationen über die Häufigkeit, mit der das drahtlose Gerät (100) nach einem Ausfall eine auf Zellenauswahl basierende Mobilität durchführen darf, wobei die Häufigkeit 1 beträgt;
Einleiten (S1330) einer bedingten Mobilität zu einer Zielzelle der einen oder mehreren Zielzellen und Starten eines Zeitgebers basierend auf der Erfüllung einer Mobilitätsausführungsbedingung für die Zielzelle;
Durchführen der bedingten Mobilität, während der Zeitgeber läuft;
Erkennen (S1220, S1340) eines Fehlers der bedingten Mobilität nach Ablauf des Zeitgebers; und
Durchführen (S1230, S1240, S1350, S1360) der auf Zellenauswahl basierenden Mobilität nach dem Ausfall der bedingten Mobilität,
wobei das Durchführen (S1230, S1240, S1350, S1360) der auf Zellenauswahl basierenden Mobilität umfasst:
Auswählen (S1230, S1350) einer Zelle, die ein Zellenauswahlkriterium erfüllt;
Bestimmen, ob die ausgewählte Zelle in der einen oder mehreren Zielzellen enthalten ist; und
Anwenden (S1240, S1360) einer Zielzellenkonfiguration, die der ausgewählten Zelle zugeordnet ist, basierend darauf, dass die ausgewählte Zelle in der einen oder mehreren Zielzellen enthalten ist,
wobei die Operationen ferner das Bestimmen (S1240, S1350) umfassen, ob die auf Zellenauswahl basierende Mobilität eine auf Zellenauswahl basierende Mobilität ist, die erstmalig nach dem Ausfall der bedingten Mobilität durchgeführt wird, und
wobei die auf Zellenauswahl basierende Mobilität basierend darauf durchgeführt wird (S1230, S1240, S1350, S1360), dass die auf Zellenauswahl basierende Mobilität eine auf Zellenauswahl basierende Mobilität ist, die erstmalig nach dem Ausfall der bedingten Mobilität durchgeführt wird.

7. Drahtloses Gerät (100) nach Anspruch 6, wobei die Operationen ferner umfassen:
Durchführen (S1380) einer Verbindungswiederherstellungsprozedur basierend auf einer aktuellen Anzahl von bedingten Mobilitätsversuchen, die die Häufigkeit überschreitet; und
Freigeben des bedingten Mobilitätsbefehls, nachdem die Verbindungswiederherstellungsprozedur eingeleitet wurde.

8. Drahtloses Gerät (100) nach Anspruch 6, wobei der Zeitgeber einen T304-Zeitgeber umfasst.

9. Mindestens ein computerlesbares Medium (CRM) (104), das Anweisungen speichert, die basierend auf der Ausführung durch mindestens einen Prozessor (102) Operationen durchführen, die umfassen:
Empfangen (S1210, S1310), von einem Netzwerkknoten, der eine Quellzelle bedient, eines bedingten Mobilitätsbefehls, umfassend i) Mobilitätsausführungsbedingungen für eine oder mehrere Zielzellen, ii) Zielzellenkonfigurationen, die der einen oder mehreren Zielzellen zugeordnet sind, und iii) Informationen über die Häufigkeit, mit der es nach einem Ausfall eine auf Zellenauswahl basierende Mobilität durchführen darf, wobei die Häufigkeit 1 beträgt;
Einleiten (S1330) einer bedingten Mobilität zu einer Zielzelle der einen oder mehreren Zielzellen und Starten eines Zeitgebers basierend auf der Erfüllung einer Mobilitätsausführungsbedingung für die Zielzelle;
Durchführen der bedingten Mobilität, während der Zeitgeber läuft;
Erkennen (S1220, S1340) eines Fehlers der bedingten Mobilität nach Ablauf des Zeitgebers; und
Durchführen (S1230, S1240, S1350, S1360) der auf Zellenauswahl basierenden Mobilität nach dem Ausfall der bedingten Mobilität,
wobei das Durchführen (S1230, S1240, S1350, S1360) der auf Zellenauswahl basierenden Mobilität umfasst:
Auswählen (S1230, S1350) einer Zelle, die ein Zellenauswahlkriterium erfüllt;
Bestimmen, ob die ausgewählte Zelle in der einen oder mehreren Zielzellen enthalten ist; und
Anwenden (S1240, S1360) einer Zielzellenkonfiguration, die der ausgewählten Zelle zugeordnet ist, basierend darauf, dass die ausgewählte Zelle in der einen oder mehreren Zielzellen enthalten ist,
wobei die Operationen ferner das Bestimmen (S1240, S1350) umfassen, ob die auf Zellenauswahl basierende Mobilität eine auf Zellenauswahl basierende Mobilität ist, die erstmalig nach dem Ausfall der bedingten Mobilität durchgeführt wird, und
wobei die auf Zellenauswahl basierende Mobilität basierend darauf durchgeführt wird (S1230, S1240, S1350, S1360), dass die auf Zellenauswahl basierende Mobilität eine auf Zellenauswahl basierende Mobilität ist, die erstmalig nach dem Ausfall der bedingten Mobilität durchgeführt wird.

10. Das mindestens eine CRM (104) nach Anspruch 9, wobei der Zeitgeber einen T304-Zeitgeber umfasst.

## Revendications

1. Procédé, réalisé par un dispositif sans fil (100) configuré pour fonctionner dans un système de communication sans fil (1), le procédé comprenant :
la réception (S1210, S1310), depuis un noeud de réseau desservant une cellule source, d'une commande de mobilité conditionnelle comprenant i) des conditions d'exécution de mobilité pour une ou plusieurs cellules cibles, ii) des configurations de cellule cible associées aux une ou plusieurs cellules cibles, et iii) des informations concernant un nombre de fois où le dispositif sans fil (100) est autorisé à réaliser une mobilité basée sur une sélection de cellule suite à un échec, le nombre de fois étant de 1 ;
l'initiation (S1330) d'une mobilité conditionnelle vers une cellule cible parmi les une ou plusieurs cellules cibles et le déclenchement d'un temporisateur si une condition d'exécution de mobilité pour la cellule cible est remplie ;
la réalisation de la mobilité conditionnelle pendant que le temporisateur tourne ;
la détection (S1220, S1340) d'un échec de la mobilité conditionnelle à l'expiration du temporisateur ; et
la réalisation (S1230, S1240, S1350, S1360) de la mobilité basée sur une sélection de cellule suite à l'échec de la mobilité conditionnelle,
la réalisation (S1230, S1240, S1350, S1360) de la mobilité basée sur une sélection de cellule comprenant :
la sélection (S1230, S1350) d'une cellule qui remplit un critère de sélection de cellule ;
la détermination si la cellule sélectionnée figure ou non dans les une ou plusieurs cellules cibles ; et
l'application (S1240, S1360) d'une configuration de cellule cible associée à la cellule sélectionnée si la cellule sélectionnée figure dans les une ou plusieurs cellules cibles,
le procédé comprenant en outre la détermination (S1240, S1350) si la mobilité basée sur une sélection de cellule est ou non une mobilité basée sur une sélection de cellule réalisée pour la première fois suite à l'échec de la mobilité conditionnelle, et
la mobilité basée sur une sélection de cellule étant réalisée (S1230, S1240, S1350, S1360) si la mobilité basée sur une sélection de cellule est la mobilité basée sur une sélection de cellule réalisée pour la première fois suite à l'échec de la mobilité conditionnelle.

2. Procédé selon la revendication 1, comprenant en outre :
la réalisation (S1380) d'une procédure de rétablissement de connexion si un nombre actuel de tentatives de mobilité conditionnelle dépasse le nombre de fois.

3. Procédé selon la revendication 2, comprenant en outre :
la libération de la commande de mobilité conditionnelle suite à l'initiation de la procédure de rétablissement de connexion.

4. Procédé selon la revendication 1, le dispositif sans fil (100) étant en communication avec un dispositif mobile et/ou un réseau (300) et/ou des véhicules autonomes (100b) autres que le dispositif sans fil (100).

5. Procédé selon la revendication 1, le temporisateur comprenant un temporisateur T304.

6. Dispositif sans fil (100) configuré pour fonctionner dans un système de communication sans fil (1), le dispositif sans fil (100) comprenant :
au moins un émetteur-récepteur (106) ;
au moins un processeur (102) ; et
au moins une mémoire d'ordinateur (104) connectable fonctionnellement à l'au moins un processeur (102) et stockant des instructions qui, lorsqu'elles sont exécutées par l'au moins un processeur (102), réalisent des opérations comprenant :
la réception (S1210, S1310), depuis un noeud de réseau desservant une cellule source, d'une commande de mobilité conditionnelle comprenant i) des conditions d'exécution de mobilité pour une ou plusieurs cellules cibles, ii) des configurations de cellule cible associées aux une ou plusieurs cellules cibles, et iii) des informations concernant un nombre de fois où le dispositif sans fil (100) est autorisé à réaliser une mobilité basée sur une sélection de cellule suite à un échec, le nombre de fois étant de 1 ;
l'initiation (S1330) d'une mobilité conditionnelle vers une cellule cible parmi les une ou plusieurs cellules cibles et le déclenchement d'un temporisateur si une condition d'exécution de mobilité pour la cellule cible est remplie ;
la réalisation de la mobilité conditionnelle pendant que le temporisateur tourne ;
la détection (S1220, S1340) d'un échec de la mobilité conditionnelle à l'expiration du temporisateur ; et
la réalisation (S1230, S1240, S1350, S1360) de la mobilité basée sur une sélection de cellule suite à l'échec de la mobilité conditionnelle,
la réalisation (S1230, S1240, S1350, S1360) de la mobilité basée sur une sélection de cellule comprenant :
la sélection (S1230, S1350) d'une cellule qui remplit un critère de sélection de cellule ;
la détermination si la cellule sélectionnée figure ou non dans les une ou plusieurs cellules cibles ; et
l'application (S1240, S1360) d'une configuration de cellule cible associée à la cellule sélectionnée si la cellule sélectionnée figure dans les une ou plusieurs cellules cibles,
les opérations comprenant en outre la détermination (S1240, S1350) si la mobilité basée sur une sélection de cellule est ou non une mobilité basée sur une sélection de cellule réalisée pour la première fois suite à l'échec de la mobilité conditionnelle, et
la mobilité basée sur une sélection de cellule étant réalisée (S1230, S1240, S1350, S1360) si la mobilité basée sur une sélection de cellule est la mobilité basée sur une sélection de cellule réalisée pour la première fois suite à l'échec de la mobilité conditionnelle.

7. Dispositif sans fil (100) selon la revendication 6, les opérations comprenant en outre :
la réalisation (S1380) d'une procédure de rétablissement de connexion si un nombre actuel de tentatives de mobilité conditionnelle dépasse le nombre de fois ; et
la libération de la commande de mobilité conditionnelle suite à l'initiation de la procédure de rétablissement de connexion.

8. Dispositif sans fil (100) selon la revendication 6, le temporisateur comprenant un temporisateur T304.

9. Support(s) lisible(s) par ordinateur, CRM, (104) stockant des instructions qui, lorsqu'elles sont exécutées par au moins un processeur (102), réalisent des opérations comprenant :
la réception (S1210, S1310), depuis un noeud de réseau desservant une cellule source, d'une commande de mobilité conditionnelle comprenant i) des conditions d'exécution de mobilité pour une ou plusieurs cellules cibles, ii) des configurations de cellule cible associées aux une ou plusieurs cellules cibles, et iii) des informations concernant un nombre de fois où il est autorisé de réaliser une mobilité basée sur une sélection de cellule suite à un échec, le nombre de fois étant de 1 ;
l'initiation (S1330) d'une mobilité conditionnelle vers une cellule cible parmi les une ou plusieurs cellules cibles et le déclenchement d'un temporisateur si une condition d'exécution de mobilité pour la cellule cible est remplie ;
la réalisation de la mobilité conditionnelle pendant que le temporisateur tourne ;
la détection (S1220, S1340) d'un échec de la mobilité conditionnelle à l'expiration du temporisateur ; et
la réalisation (S1230, S1240, S1350, S1360) de la mobilité basée sur une sélection de cellule suite à l'échec de la mobilité conditionnelle,
la réalisation (S1230, S1240, S1350, S1360) de la mobilité basée sur une sélection de cellule comprenant :
la sélection (S1230, S1350) d'une cellule qui remplit un critère de sélection de cellule ;
la détermination si la cellule sélectionnée figure ou non dans les une ou plusieurs cellules cibles ; et
l'application (S1240, S1360) d'une configuration de cellule cible associée à la cellule sélectionnée si la cellule sélectionnée figure dans les une ou plusieurs cellules cibles,
les opérations comprenant en outre la détermination (S1240, S1350) si la mobilité basée sur une sélection de cellule est ou non une mobilité basée sur une sélection de cellule réalisée pour la première fois suite à l'échec de la mobilité conditionnelle, et
la mobilité basée sur une sélection de cellule étant réalisée (S1230, S1240, S1350, S1360) si la mobilité basée sur une sélection de cellule est la mobilité basée sur une sélection de cellule réalisée pour la première fois suite à l'échec de la mobilité conditionnelle.

10. CRM (104) selon la revendication 9, le temporisateur comprenant un temporisateur T304.
